# EUROPEAN PATENT APPLICATION

(11) **EP 4 506 875 A1**
(43) Date of publication of application: **12.02.2025**
(21) Application number: 24194162.4
(22) Date of filing: 12.08.2024
(51) Int. Cl.: G06Q 10/20, G06Q 10/30, H04B 7/185, G06Q 10/04, G06Q 10/06, G06N 3/00

(54) **LEARNING-BASED MISSION ANALYSIS AND CONTROL SYSTEM**

(30) Priority: 10.08.2023 US 202363518766 P; 08.12.2023 US 202363607737 P; 09.08.2024 US 202418799722; 09.08.2024 US 202418799710
(71) Applicant: Hamilton Sundstrand Corporation, Charlotte, NC 28217-4578 (US)
(72) Inventor: ROHRIG, Jake, Simsbury CT 06070 (US); TORRES, Miguel A., South Windsor CT 06074 (US); SANDIDGE, Hunter, Barrington IL 60010 (US); WEHR, Jackson Thomas, Lake in the Hills II 60010 (US); KIRK, Thomas, Austin TX 78749 (US)
(74) Representative: Dehns

(57) **Abstract**

Embodiments of the disclosure provide a deep-mission system that includes a processor system operable to perform processor system operations that include executing a first instance of a cognitive algorithm; generating data of the deep-mission system that can be used to fine-tune the first instance of the cognitive algorithm; and transmitting the data of the deep-mission system over a deep-mission communication path to a remote station (850). The remote station (850) is operable to, based at least in part on the data of the deep-mission system, perform fine-tuning operations on a second instance of the cognitive algorithm located at the remote station (850); generate updates to the cognitive algorithm based on the fine-tuning operations; and transmit the updates to the cognitive algorithm over the deep-mission communication path to the deep-mission system. The processor system operations further include using the updates to the cognitive algorithm to update the first instance of the cognitive algorithm.

## Description

### CROSS-REFERENCE TO RELATED APPLICATIONS

This application claims the benefit of United States Provisional Application No. 63/518,766 filed August 10, 2023, and United States Provisional Application No. 63/607,737 filed December 8, 2023, the disclosures of which are incorporated herein by reference in their entirety.

### BACKGROUND

The present disclosure relates in general to electronic analysis of computer-controlled, remotely located products and systems and, more particularly, to a learning-based mission analysis and control (MAC) system operable to automatically monitor and analyze data to detect trending and perform troubleshooting. In embodiments of the disclosure, the learning-based MAC system can be implemented as a distributed deep-space cognitive, learning-based MAC system operable to include earth-based MAC systems, near-earth orbital MAC systems, and deep-space MAC systems.

The term "mission" is used herein to refer to any activity with some intended goal that generates telemetry (i.e., telemetry data) in the process of achieving that goal. In general, telemetry data refers to the collection and transmission of measurements from sources using, for example, sensors and protocols. A mission often involves the use of some form of mobile or stationary structure, including but not limited to semi-trucks, construction vehicles, office buildings, planes, trains, hospital beds, submarines, and the like. In some situations, a mission can involve human exploration of their surroundings, including travel into unknown, hazardous or difficult to access regions to discover and learn. Such missions can occur on land having all types of terrains (e.g. mountains, caves, and the like); underground at various depths; through bodies of water at various depths; in the air within Earth's atmosphere; and beyond Earth's atmosphere into space.

A non-limiting example of human exploration/mission activity is space exploration. A common type of space exploration uses astronomy and various forms of space technology to explore outer space. While this type of space exploration is carried out mainly by astronomers with telescopes, physical space exploration is conducted both by uncrewed robotic space probes and human spaceflight. Space exploration, like its classical form astronomy, is one of the main sources for space science. Deep-space exploration (i.e., a type of deep-mission exploration) is the branch of astronomy, astronautics and space technology that is involved with exploring the distant regions of outer space. Using Earth as the home planet, deep-space is the region of space beyond the dark side of Earth's Moon, including Lagrange 2 (or L2) (274,000 miles from Earth) and asteroids. L2 is one of five Sun-Earth Lagrange points, which are positions in space where the gravitational pull of the Sun and Earth combine such that small objects in that region have the same orbital period (length of year) as Earth. Some Lagrange points are being used for space exploration. Two important Lagrange points in the Sun-Earth system are L1, between the Sun and Earth, and L2, on the same line at the opposite side of the Earth. Both L1 and L2 are well outside the Moon's orbit. Currently, an artificial satellite called the deep space climate observatory (DSCOVR) is located at L1 to study solar wind coming toward Earth from the Sun and to monitor Earth's climate by taking images and sending them back. The James Webb Space Telescope, which is a powerful infrared space observatory, is located at L2. This allows the satellite's large sunshield to protect the telescope from the light and heat of the Sun, Earth and Moon.

Space endeavors are grouped into sectors, including civil, national security (i.e., defense and intelligence), and commercial. Each sector operates with its own goals and assets, although they all rely on a common space industrial base, workforce, and infrastructure. The civil space sector generally covers non-defense-related government space activities, including launching satellites, managing satellites, conducting research, and exploring the solar system. In the United States, nearly all civil space missions are managed or run by the National Aeronautics and Space Administration (NASA) and the National Oceanic and Atmospheric Administration (NOAA).

The national security space sector covers both the defense sector and the intelligence sector. The U.S. Department of Defense oversees space missions in support of military operations, and several agencies in the U.S. intelligence community are involved in operating space assets for intelligence purposes to support military and law enforcement operations.

The commercial space sector generally includes goods, services and activities provided by private sector enterprises with the legal capacity to offer their products to nongovernmental customers. Examples of the commercial use of space include satellite navigation, satellite television and commercial satellite imagery. Operators of such services typically contract the manufacturing of satellites and their launch to private or public companies, which form an integral part of the space economy. Commercial space efforts are growing at a rapid pace.

The computing systems, mechanical systems, and know-how required to safely execute and monitor mission control activities in general, and deep-space activities in particular, are extensive and complicated.

### BRIEF DESCRIPTION

Disclosed is a system that includes a processor system electronically connected to a memory. The processor system performs processor system operations that include executing a first cognitive algorithm to generate an initial cognitive output associated with an initial cognitive output action. In embodiments of the disclosure, a cognitive algorithm refers to a variety of algorithm types that generate and apply computerized models to simulate the human thought process in complex situations where the answers might be ambiguous and uncertain. A conventional cognitive algorithm includes self-learning technologies that use data mining, pattern recognition, natural language processing (NLP), and other related technologies to generate the mathematical models that make decisions (e.g., classifications, predictions, and the like) that, in effect, mimic human intelligence. In embodiments of the disclosure, the modifier "cognitive" as applied to "outputs" and/or "output actions" refers to the outputs, actions, and the like generated by cognitive algorithms to represent the result of the analysis operations performed by cognitive algorithms. A non-limiting example of a cognitive output action is predicting a range of failure dates for components of an in-service system, and a non-limiting example of a cognitive output associated with the cognitive action is an actual prediction that there is an 80% likelihood that component A of in-service system A will fail in 2-3 months from today. The cognitive output associated with the cognitive action can further include a recommendation that component A be serviced or replaced in 1 month. Prior to initiating the initial cognitive output action associated with the initial cognitive output, the initial cognitive output is displayed to a user. Responsive to receiving user feedback on the initial cognitive output, post-user-feedback operations are executed based at least in part on the user feedback. Continuing with the previous example, a non-limiting example of user feedback is the user's agreement that there is an 80% likelihood that component A of in-service system A will fail, along with the user's disagreement that component A will fail in 2-3 months. In this case the user feedback can further include the user's assessment that component A will fail in 12-14 months, along with support for the user's assessment hat component A will fail in 12-14 months. The user feedback can further include a recommendation that component A be serviced or replaced in 10 months instead of 1 month.

Disclosed is a deep-mission system that includes a processor system electronically connected to a memory. The processor system is operable to perform processor system operations that include executing a first instance of a cognitive algorithm; generating data of the deep-mission system that can be used to fine-tune the first instance of the cognitive algorithm; and transmitting the data of the deep-mission system over a deep-mission communication path to a remote station. The remote station is operable to, based at least in part on the data of the deep-mission system, perform fine-tuning operations on a second instance of the cognitive algorithm located at the remote station; generate updates to the cognitive algorithm based on the fine-tuning operations; and transmit the updates to the cognitive algorithm over the deep-mission communication path to the deep-mission system. The processor system operations further include using the updates to the cognitive algorithm to update the first instance of the cognitive algorithm.

In addition to any one or more of the features described herein, the deep-mission system includes a deep-space system.

In addition to any one or more of the features described herein, the remote station includes an earth-based computational hub.

In addition to any one or more of the features described herein, the remote station includes a near-earth station of an earth-based computational hub.

In addition to any one or more of the features described herein, the remote station includes a main computational hub.

In addition to any one or more of the features described herein, the remote station includes a satellite station of a main computational hub.

In addition to any one or more of the features described herein, the data of the deep-space system includes operating data generated by deployed products of the deep-mission system.

In addition to any one or more of the features described herein, the data of the deep-mission system includes feedback generated by a user of the deep-mission system located at the deep-mission system.

In addition to any one or more of the features described herein, the processor system operations further include executing the first instance of the cognitive algorithm to generate an initial cognitive output associated with an initial cognitive output action.

In addition to any one or more of the features described herein, the processor system operations further include, prior to initiating the initial cognitive output action associated with the initial cognitive output, displaying the initial cognitive output to a user of the deep-mission system located at the deep-mission system.

In addition to any one or more of the features described herein, the processor system operations further include, responsive to receiving user feedback on the initial cognitive output, executing post-user-feedback operations based at least in part on the user feedback.

In addition to any one or more of the features described herein, the first instance of the cognitive algorithm includes one or more of an anomaly detection cognitive algorithm, a prognostics cognitive algorithm, and a performance evaluation cognitive algorithm.

In addition to any one or more of the features described herein, the user feedback includes a user agreement with the initial cognitive output; and the post-user-feedback operations include initiating the initial cognitive output action.

In addition to any one or more of the features described herein, the user feedback includes a modification of the initial cognitive output.

In addition to any one or more of the features described herein, the user feedback includes a modification of the initial cognitive output action.

Embodiments of the disclosure are also directed to computer-implemented methods and computer program products have substantially the same features, functionality, and combinations of features and functionality described above.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a simplified block diagram illustrating a deep-mission environment implemented as a space environment in which embodiments of the disclosure can be applied;
FIG. 2A is a simplified block diagram illustrating a system in accordance with embodiments of the disclosure;
FIG. 2B is a simplified block diagram illustrating a system in accordance with embodiments of the disclosure;
FIG. 3 is a simplified block diagram illustrating a system in accordance with embodiments of the disclosure;
FIG. 4A is a simplified block diagram illustrating a system in accordance with embodiments of the disclosure;
FIG. 4B is a simplified block diagram illustrating a system in accordance with embodiments of the disclosure;
FIG. 5A is a flow diagram illustrating a methodology in accordance with embodiments of the disclosure;
FIG. 5B is a flow diagram illustrating a methodology in accordance with embodiments of the disclosure;
FIG. 6A is a simplified block diagram illustrating a system in accordance with embodiments of the disclosure;
FIG. 6B is a simplified block diagram illustrating a system in accordance with embodiments of the disclosure;
FIG. 6C is a simplified block diagram illustrating a system in accordance with embodiments of the disclosure;
FIG. 6D is a simplified block diagram illustrating a system in accordance with embodiments of the disclosure;
FIG. 7A is a flow diagram illustrating a methodology in accordance with embodiments of the disclosure;
FIG. 7B is a flow diagram illustrating a methodology in accordance with embodiments of the disclosure;
FIG. 8 is a simplified block diagram illustrating a system in accordance with embodiments of the disclosure;
FIG. 9A is a simplified block diagram illustrating a system in accordance with embodiments of the disclosure;
FIG. 9B is a simplified block diagram illustrating a system in accordance with embodiments of the disclosure;
FIG. 10 is a simplified block diagram illustrating a system in accordance with embodiments of the disclosure;
FIG. 11 is a simplified block diagram illustrating a system in accordance with embodiments of the disclosure;
FIG. 12 is a flow diagram illustrating a methodology in accordance with embodiments of the disclosure;
FIG. 13A is a simplified block diagram illustrating a system and/or methodology in accordance with embodiments of the disclosure;
FIG. 13B is a simplified block diagram illustrating a system and/or methodology in accordance with embodiments of the disclosure;
FIG. 13C is a simplified block diagram illustrating a system and/or methodology in accordance with embodiments of the disclosure;
FIG. 13D is a simplified block diagram illustrating a system and/or methodology in accordance with embodiments of the disclosure;
FIG. 14A is a simplified block diagram illustrating a system and/or methodology in accordance with embodiments of the disclosure;
FIG. 14B is a simplified block diagram illustrating a system and/or methodology in accordance with embodiments of the disclosure;
FIG. 14C is a simplified block diagram illustrating a system and/or methodology in accordance with embodiments of the disclosure;
FIG. 15A is a simplified block diagram illustrating a system and/or methodology in accordance with embodiments of the disclosure;
FIG. 15B is a simplified block diagram illustrating a system and/or methodology in accordance with embodiments of the disclosure;
FIG. 16 depicts a machine learning system that can be utilized to implement aspects of the disclosure;
FIG. 17 depicts a learning phase that can be implemented by the machine learning system shown in FIG. 16; and
FIG. 18 depicts details of an exemplary computing system capable of implementing various aspects of the disclosure.

### DETAILED DESCRIPTION

A detailed description of one or more embodiments of the disclosed apparatus and method are presented herein by way of exemplification and not limitation with reference to the Figures.

The term "mission" is used herein to refer to any activity with some intended goal that generates telemetry (i.e., telemetry data) in the process of achieving that goal. In general, telemetry data refers to the collection and transmission of measurements from sources using, for example, sensors and protocols. A mission often involves the use of some form of mobile or stationary structure, including but not limited to semi-trucks, construction vehicles, office buildings, planes, trains, hospital beds, submarines, and the like. In some situations, a mission can involve human exploration of their surroundings, including travel into unknown, hazardous or difficult to access regions to discover and learn. Such missions can occur on land having all types of terrains (e.g. mountains, caves, and the like); underground at various depths; through bodies of water at various depths; in the air within Earth's atmosphere; and beyond Earth's atmosphere into space.

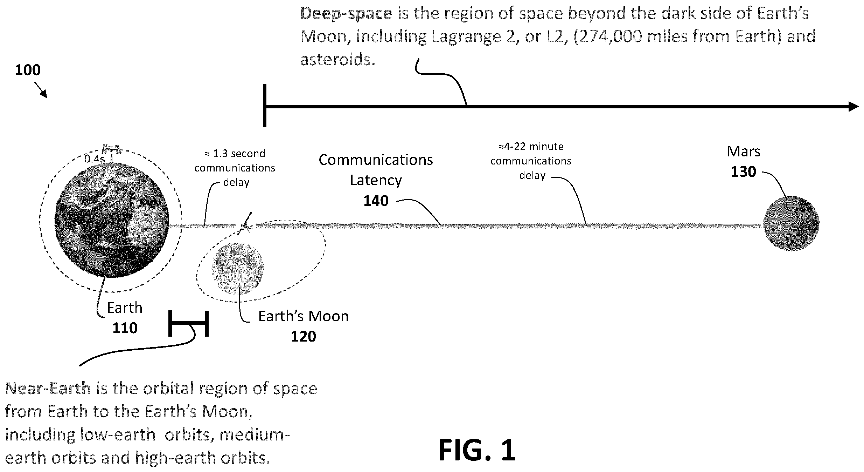

A non-limiting example of human exploration/mission activity is space exploration. A common type of space exploration uses astronomy and various forms of space technology to explore outer space. While this type of space exploration is carried out mainly by astronomers with telescopes, physical space exploration is conducted both by uncrewed robotic space probes and human spaceflight. Space exploration, like its classical form astronomy, is one of the main sources for space science. Deep-space exploration (i.e., a type of deep-mission exploration) is the branch of astronomy, astronautics and space technology that is involved with exploring the distant regions of outer space. FIG. 1 is a diagram illustrating relative positions of the Earth 110, the Earth's Moon 120 and Mars 130. Using Earth 110 as the home planet, deep-space is the region of space beyond the dark side of Earth's Moon 120, including Lagrange 2 (or L2) (274,000 miles from Earth 110) and asteroids. L2 is one of five Sun-Earth Lagrange points, which are positions in space where the gravitational pull of the Sun and Earth combine such that small objects in that region have the same orbital period (length of year) as Earth 110.

U.S. and international space authorities have ambitious manned spaceflight schedules through the mid-21st century, which includes manned deep-space exploration. Manned deep-space exploration presents a number of challenges. For example, deep-space explorers will not have real-time oversight from mission control. As shown in FIG. 1, the communication latency 140 for electronic information transmitted between Earth 110 and Mars 130 varies between about four (4) to about twenty-four (24) minutes each way, depending on the positions of the planets. In comparison, the communications delay 140 for electronic information transmitted between Earth and a satellite in near-Earth orbit is about 1.3 seconds. Thus, deep-space astronauts will need alternative methods to access subject matter expertise at their fingertips to resolve any problems that occur during deep-space missions. Computing capabilities will be limited on the edge (i.e., onboard deep-space spacecraft or habitats), especially compared to Earth-based computing resources. The limited computing capabilities on the edge will limit the ability to use such resources to train artificial intelligence (AI) algorithms on the edge. Additionally, AI algorithms are susceptible to drift, which would ordinarily be corrected by having a human subject matter expert validate model learning over time. In general, "drift" refers to when AI algorithms behave in unexpected or unpredictable ways that stray away from the original parameters. This can happen because attempts to improve parts of complicated AI models cause other parts to perform worse or the underlying content upon which the AI was initially trained changes. These validation activities are best performed by SME located on Earth and not deep-space astronauts conducting a deep-space mission.

Additionally, as previously noted herein, the computing systems, mechanical systems, and know-how required to safely execute and control mission activities in general, and space flight activities in particular, are extensive and complicated. The growth of space endeavors of all types, particularly commercial, will place a strain on existing computing systems, mechanical systems, and know-how that are required to safely execute and control general flight and space flight activities. These existing mission/flight control systems suffer from a number of shortcomings, including, but not limited to, difficulty performing efficient and effective trending and performance analysis due at least in part to disparate data domains (e.g. different sets of related data collected, formatted, and housed in various disconnected repositories); manual human data extraction (resulting in lagged/non-real time analysis); manual data analysis (creating opportunities for human error in calculation or interpretation); human capital shortages in the data engineering/analytics/science domain relative to the quantity of mission critical needs; and the loss of knowledge due to attrition of subject matter experts responsible for running and maintaining systems over time.

Exemplary embodiments of the disclosure address the above-described shortcomings and others by providing a novel learning-based mission analysis and control (MAC) system. In some embodiments of the disclosure, the learning-based MAC system can be implemented as a distributed deep-space cognitive, learning-based MAC system operable to include earth-based MAC systems, near-earth orbital MAC systems, and deep-space MAC systems. All of the MAC systems rely on a novel combination of subject matter expert (SME) inputs and AI models that assist with providing a variety of MAC services to near-earth mission operations and deep-space mission operations. In accordance with aspects of the disclosure, communication latency delays (e.g., communications latency 140 shown in FIG. 1) are avoided by assigning computationally expensive model training and update operations of the novel distributed deep-space cognitive learning-based MAC system to the near-earth MAC systems and/or to the earth-based MAC systems. The near-earth MAC systems and/or the earth-based MAC systems operate in a novel federated learning configuration to receive new data from the deep-space MAC system, perform the computationally expensive tasks of updating the models used by the deep-space MAC system, and transmit trained and/or updated models to the deep-space MAC systems for deployment. The trained and/or updated models are trained and/or updated using data (both operational data and SME data) gathered from the deep-space MAC systems, along with data (both operational data and SME data) gathered from multiple instances of the near-earth MAC systems. The trained and/or updated models transmitted to the deep-space MAC system are operable to automatically monitor and analyze data to detect trending and perform troubleshooting, and further operable to ingest and capture human expertise that can be used to augment self-learning functions.

In accordance with embodiments of the disclosure, the deep-space MAC systems substantially mirror the near-earth MAC systems such that models trained and/or updated by the multiple instances of the near-earth MAC systems are directly applicable to the deep-space MAC system. The near-earth MAC systems and/or the earth-based MAC systems are configured to utilize novel model training and generation techniques that improve the efficiency and effectiveness of the model training, and further captures SME knowledge through interactions between SMEs and any of the systems in the novel distributed deep-space cognitive, learning-based MAC system.

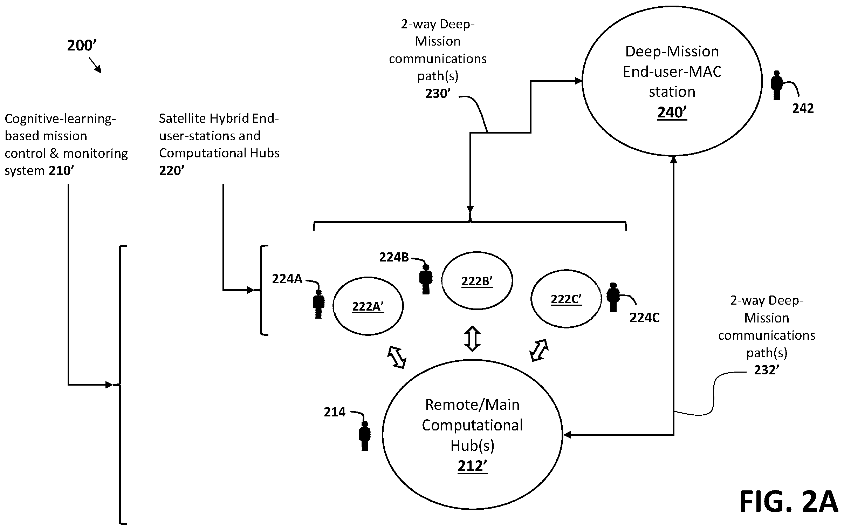

FIG. 2A depicts a simplified block diagram illustrating a non-limiting example of a novel distributed deep-mission cognitive, learning-based MAC system 200' in accordance with aspects of the disclosure. The system 200' includes a cognitive-learning-based MAC system 210' formed from one or more remote/main computational hubs 212' and a configuration of "satellite" hybrid end-user stations and computational hubs 220' formed from multiple instances of satellite MAC systems 222A', 222B', 222C'. The term "satellite" is used broadly to denote a station that is separate from but in communication with the remote/main computational hub(s) 212'. In some embodiments of the disclosure, the "satellite" hybrid end-user stations and computational hubs 220' can perform some or all of the functionality of the remote/main computational hub(s) 212'. One or more of the multiple instances of satellite MAC systems 222A', 222B', 222C' communicate over a 2-way deep-mission communication paths 230' with a deep-mission end-user MAC station 240'. Additionally, the one or more remote/main computational hubs 212' can communicate over 2-way deep-mission communications paths 232' with the deep-mission end-user MAC station 240'. In some embodiments of the disclosure, the 2-way deep-mission communications paths 230' and the 2-way deep-mission communications paths 232' can overlap with one another. As shown, various SMEs interact with the system 200'. More specifically, SMEs 214 interact with the remote/main computational hub(s) 212'; SMEs 224A, 224B, 224C interact with the multiple instances of the satellite MAC systems 222A', 222B', 222C', respectively; and SMEs 242 (which can be an astronaut) interact with the deep-mission end-user MAC station 240'. In embodiments of the disclosure, the system 200' can be applied to a variety of domains. For example, the domain can be deep-sea exploration; the deep-mission end-user MAC station 240' can be a deep-sea location; and the cognitive-learning-based mission control & monitoring system 210' can be distributed at various land-based and/or air-based locations.

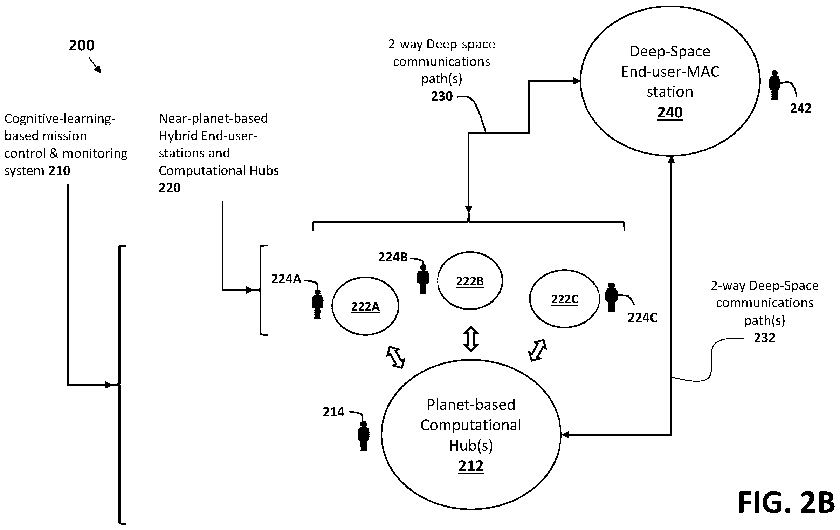

FIG. 2B depicts a simplified block diagram illustrating a non-limiting example of how the system 200' can be implemented in a space exploration domain as a novel distributed deep-space cognitive, learning-based MAC system 200 in accordance with aspects of the disclosure. The system 200 includes a cognitive-learning-based MAC system 210 formed from one or more planet-based computational hubs 212 and a configuration of near-planet-based hybrid end-user stations and computational hubs 220 formed from multiple instances of near-planet MAC systems 222A, 222B, 222C. One or more of the multiple instances of near-planet MAC systems 222A, 222B, 222C communicate over 2-way deep-space communication paths 230 with a deep-space end-user MAC station 240. Additionally, the one or more remote/main computational hubs 212 can communicate over 2-way deep-mission communications paths 232 with the deep-mission end-user MAC station 240. In some embodiments of the disclosure, the 2-way deep-mission communications paths 230 and the 2-way deep-mission communications paths 232 can overlap with one another. As shown, various SMEs interact with the system 200. More specifically, SMEs 214 interact with the planet-based computational hub(s) 212; SMEs 224A, 224B, 224C interact with the multiple instances of the near-planet MAC systems 222A, 222B, 222C, respectively; and SMEs 242 (which can be an astronaut) interact with the deep-space end-user MAC station 240. In some embodiments of the disclosure, the planet is Earth (e.g., Earth 110 shown in FIG. 1).

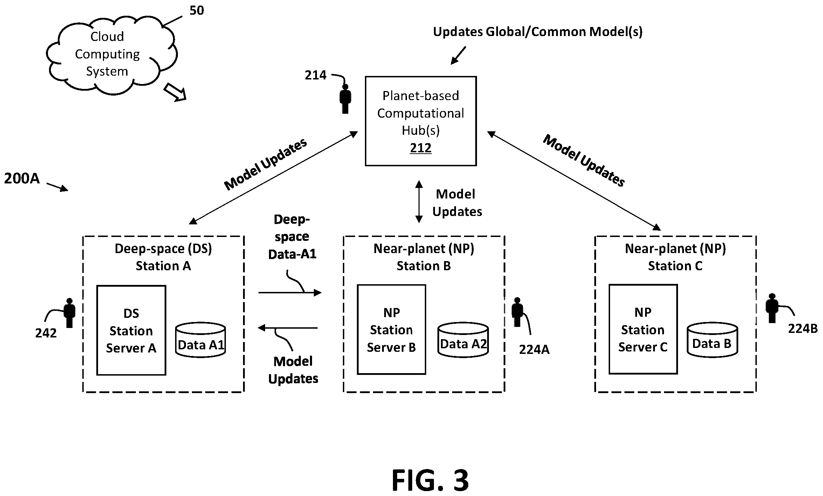

FIG. 3 depicts a simplified block diagram illustrating a non-limiting example of a novel distributed deep-space cognitive, learning-based MAC system 200A in accordance with aspects of the disclosure. The system 200A corresponds to the system 200 depicted in FIG. 2B but further illustrates how computational tasks are distributed among the components of the system 200A. In general, the system 200A includes the one or more planet-based computational hubs 212; a configuration of near-planet (NP) stations including NP station B and NP station C; and a deep-space (DS) station A, configured and arranged as shown. The NP station C corresponds to any one of the multiple instances of the near-earth MAC systems 222A, 222B, 222C shown in FIG. 2B; and the NP station B corresponds to any one of the multiple instances of the near-earth MAC systems 222A, 222B, 222C shown in FIG. 2B. As shown, various SMEs interact with the system 200A. More specifically, SMEs 214 interact with the planet-based computational hub(s) 212; SMEs 224A, 224B (which can also be astronauts) interact with the NP station B and the NP station C, respectively; and SMEs 242 (which can be an astronaut) interact with the deep-space station A.

The system 200A implements a novel form of federated learning in accordance with embodiments of the disclosure. In known federated learning systems, a common or global ML model is computed by an aggregator server using input about several locally resident ML models that have been trained using private and locally held data. The aggregation server generates an initial version of a global or common ML model and broadcasts it to each of the locally resident server. Each of the locally resident servers includes training data and test data. Each of the locally resident servers uses its local data to train its own local ML model in a privacy-preserving way (to avoid leakage of sensitive inferences about its data) and sends parameters of its local ML model to the aggregation server, which collects the parameters of the various ML models from the locally resident servers, uses them to calculate updated parameters for the global ML model, and sends the global ML model parameters back to the locally resident servers for a new round of local ML model training based on the global ML model parameters. After several rounds of continuously updating the global ML model in this fashion, a desired model performance level is reached. The aggregation server then shares this global ML model with each of the locally resident servers for future use on each of the locally resident server's private and locally held data.

In contrast to known federated learning techniques, in the novel federated learning technique used in the system 200A, aggregation operations are distributed among the planet-based computational hub(s) 212 and the NP stations B & C in any suitable fashion, and data A2 and data B are shared freely between and among the planet-based computational hub(s) 212 and the NP stations B & C. Because of the communications latency 140 (shown in FIG. 1) from Earth 110 (shown in FIG. 1) into deep space, and because of the reduced power and computational resources in deep space, computationally expensive model training and fine-tuning operations are not performed at the DS station server A. Instead, data A1 of the deep-space station A is accumulated at the deep-space station server A and transmitted over a communication path (e.g., the 2-way deep space communications path(s) 230 shown in FIG. 2B) to one or more of the NP stations B & C according to a suitable transmission schedule that takes into account the communications latency 140. One or more of the NP stations B & C perform the computationally expensive training and fine-tuning operations on ML models used at the DS station A. In some embodiments of the disclosure, the planet-based computational hub(s) 212 perform the computationally expensive training and fine-tuning operations on ML models used at the DS station A and communicate the same to the DS station A through NP station B, through NP station C, and/or through direct communication with DS station A. The model training and fine-tuning can be performed using any combination of data A1, data A2 and data B, thereby creating an aggregated ML model that leverages knowledge (including SME knowledge) accumulated at the deep-space station A, the near-planet station A, the near-planet station B. The original aggregated ML models and subsequent updates thereto are transmitted over the communications path (e.g., the 2-way deep space communications path(s) 230 shown in FIG. 2B) to the deep-space station A. After several rounds of continuously updating the aggregated ML model in this fashion, a desired model performance level is reached. In accordance with embodiments of the disclosure, this desired performance level is configured and arranged such that the deep-space station A can perform MAC functions over relatively long periods of time (e.g., a year or more) without additional model updates in emergency situations where communication over the communications path to one or more of the NP stations A & B is interrupted.

A cloud computing system 50 can be in wired or wireless electronic communication with one or all of components of the system 200A. Cloud computing system 50 can supplement, support, or replace some or all of the functionality of the components of the system 200A. Additionally, some or all of the functionality of the components of the system 200A can be implemented as a node of the cloud computing system 50.

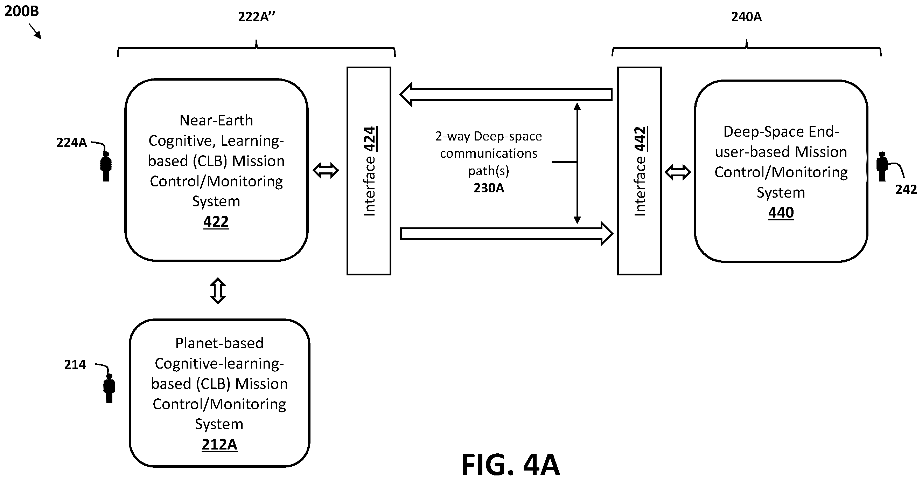

FIG. 4A depicts a simplified block diagram illustrating a non-limiting example of a novel distributed deep-space cognitive, learning-based MAC system 200B in accordance with aspects of the disclosure. The system 200B corresponds to the systems 200', 200, 200A depicted in FIGS. 2A, 2B and 3 but provides additional details about how the near-planet MAC system 222A (shown in FIG. 2B) can be implemented as a near-earth MAC system 222A" having a near-earth cognitive-learning-based (CLB) MAC system 422 and an interface 424. The SME 224A interfaces and/or interacts with the near-earth CLB, MAC system 422. The system 200B also provides additional details about how the deep-space end-user MAC station 240 (shown in FIG. 2B) can be implemented as a deep-space end-user MAC station 240A having a deep-space end-user MAC system 440 and an interface 442. The SME 242 interfaces and/or interacts with the deep-space end-user-based MAC system 440. The system 200B also provides additional details about how the planet-based computational hub(s) 212 (shown in FIG. 2B) can be implemented as a planet-based CLB, MAC system 212A. The SME 214 interfaces and/or interacts with the planet-based CLB, MAC system 212A. The near-earth MAC system 222A" communicates with the deep-space end-user MAC station 240A over a 2-way communication path 230A.

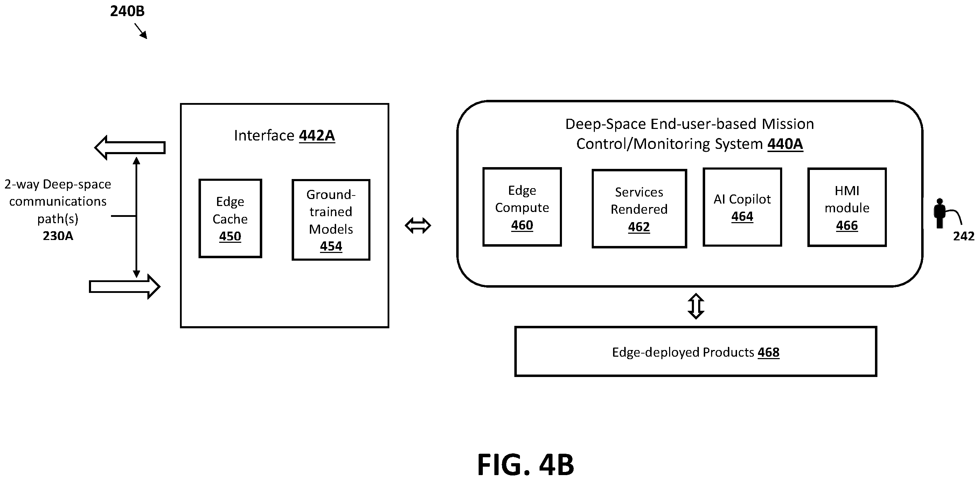

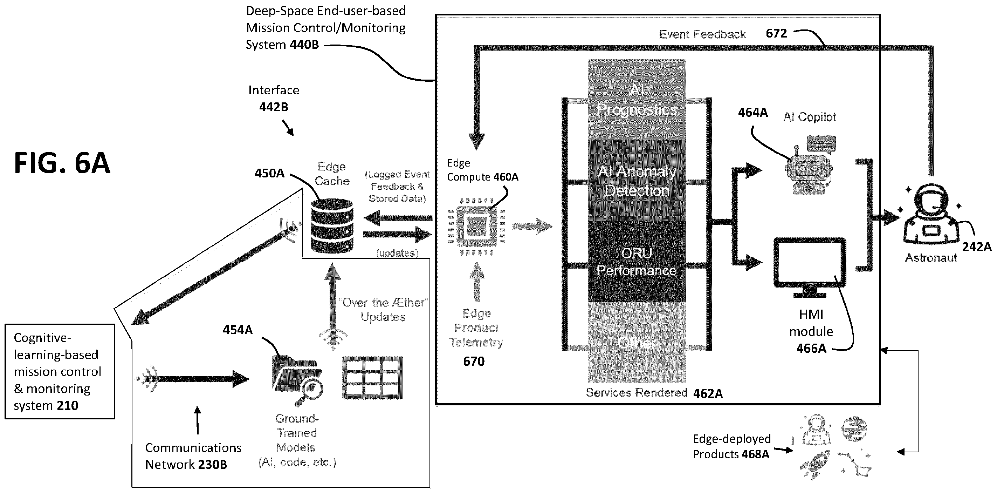

FIG. 4B depicts a simplified block diagram illustrating a non-limiting example of how the deep-space end-user MAC station 240A (shown in FIG. 4A) can be implemented as a deep-space end-user MAC station 240B having a deep-space end-user MAC system 440A and an interface 442A. The interface 442A includes an edge cache 450, and ground-trained models 454 that correspond to the model updates transmitted from the NP station B to the deep-space station A shown in FIG. 3. The deep-space end-user-based MAC system 440A includes an edge compute module or processor 460, a services rendered module 462 that houses various ML models (e.g., services rendered module 462A shown in FIG. 6A), an AI copilot module 464, and a human machine interface (HMI) module 466 (e.g., a natural language interface (NLI), a GUI, and the like), configured and arranged as shown. In some embodiments of the disclosure, the AI copilot module 464 can be integrated with the HMI module 466. In some embodiments of the disclosure, the deep-space end-user-based MAC system 440A can be embedded and/or contained in the edge-deployed products 468. The SME 242 interfaces and/or interacts with the deep-space end-user-based MAC system 440A.

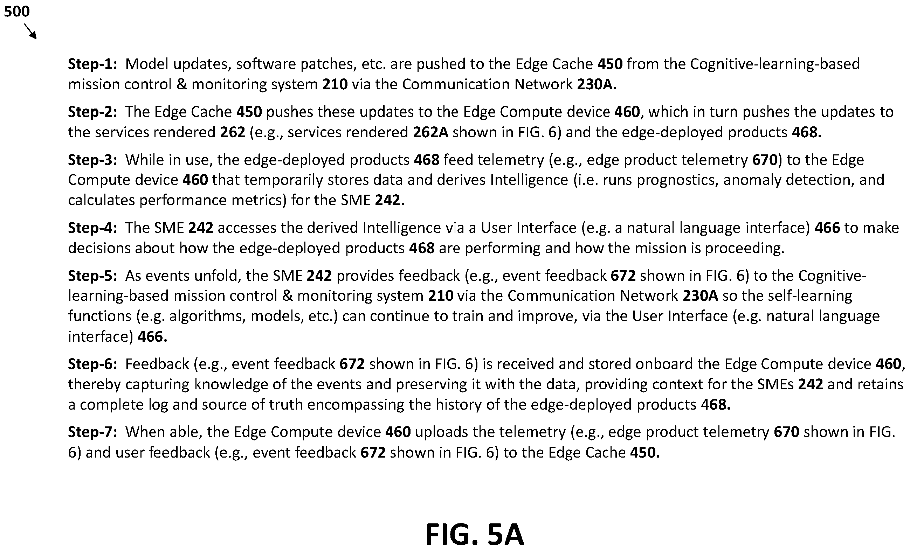

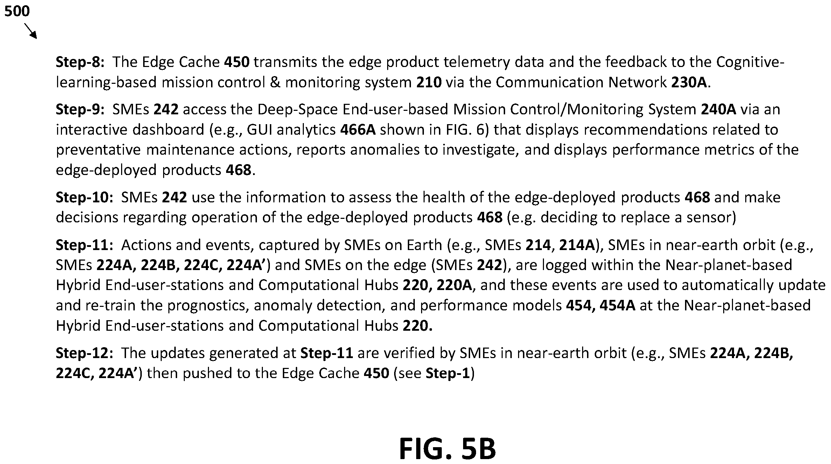

The operation of the system 200, 200B and the deep-space end-user MAC station 240B will now be described with primary reference to the methodology 500 shown in FIGS. 5A and 5B with references where appropriate to corresponding elements, processes, and illustrations in FIGS. 1-4B. Turning first to FIG. 5A, the methodology 500 begins at Step-1 where model updates, software patches, etc. are pushed to the Edge Cache 450 from the CBL MAC system 210 via the Communication Network 230A. At Step-2, the Edge Cache 450 pushes these updates to the Edge Compute device 460, which in turn pushes the updates to the services rendered 262 (e.g., services rendered 262A shown in FIG. 6A) and the edge-deployed products 468. At Step-3, while in use, the edge-deployed products 468 feed telemetry (e.g., edge product telemetry 670) to the Edge Compute device 460 that temporarily stores data and derives Intelligence (i.e., runs prognostics, anomaly detection, and calculates performance metrics) for the SME 242. At Step-4, the SME 242 accesses the derived Intelligence via the HMI 466 to make decisions about how the edge-deployed products 468 are performing and how the mission is proceeding. At Step-5, as events unfold, the SME 242 provides feedback (e.g., event feedback 672 shown in FIG. 6A) to the CBL MAC 210 via the Communication Network 230A so the self-learning functions (e.g., algorithms, models, etc.) can continue to train and improve, via the HMI 466. At Step-6, feedback (e.g., event feedback 672 shown in FIG. 6A) is received and stored onboard the Edge Compute device 460, thereby capturing knowledge of the events and preserving it with the data, providing context for the SMEs 242 and retains a complete log and source of truth encompassing the history of the edge-deployed products 468. At Step-7, when able, the Edge Compute device 460 uploads the telemetry (e.g., edge product telemetry 670 shown in FIG. 6A) and user feedback (e.g., event feedback 672 shown in FIG. 6A) to the Edge Cache 450.

Turning next to FIG. 5B, at Step-8, the Edge Cache 450 transmits the edge product telemetry data and the feedback to the CBL MAC 210 via the Communication Network 230A. At Step-9, SMEs 242 access the Deep-Space End-user-based MAC 240A via an interactive dashboard (e.g., HMI module 466A shown in FIG. 6A) that displays recommendations related to preventative maintenance actions, reports anomalies to investigate, and displays performance metrics of the edge-deployed products 468. At Step-10, SMEs 242 use the information to assess the health of the edge-deployed products 468 and make decisions regarding operation of the edge-deployed products 468 (e.g., deciding to replace a sensor). At Step-11, actions and events, captured by SMEs on Earth (e.g., SMEs 214, 214A), SMEs in near-earth orbit (e.g., SMEs 224A, 224B, 224C, 224A') and/or SMEs on the edge (SMEs 242, ), are logged within the Near-planet-based Hybrid End-user-stations and Computational Hubs 220, 220A, and these events are used to automatically update and re-train the prognostics, anomaly detection, and performance models 454, 454A at the Near-planet-based Hybrid End-user-stations and Computational Hubs 220. In some embodiments of the disclosure, at Step-11, SMEs on Earth (e.g., SMEs 214, 214A) and/or SMEs in near-earth orbit (e.g., SMEs 224A, 224B, 224C, 224A') can send communications and recommended actions over the communications paths 230A to the SMEs on the edge (SMEs 242). At Step-12, the updates generated at Step-11 are verified by SMEs in near-earth orbit (e.g., SMEs 224A, 224B, 224C, 224A'), or verified by SMEs on Earth, then pushed to the Edge Cache 450 (see Step-1).

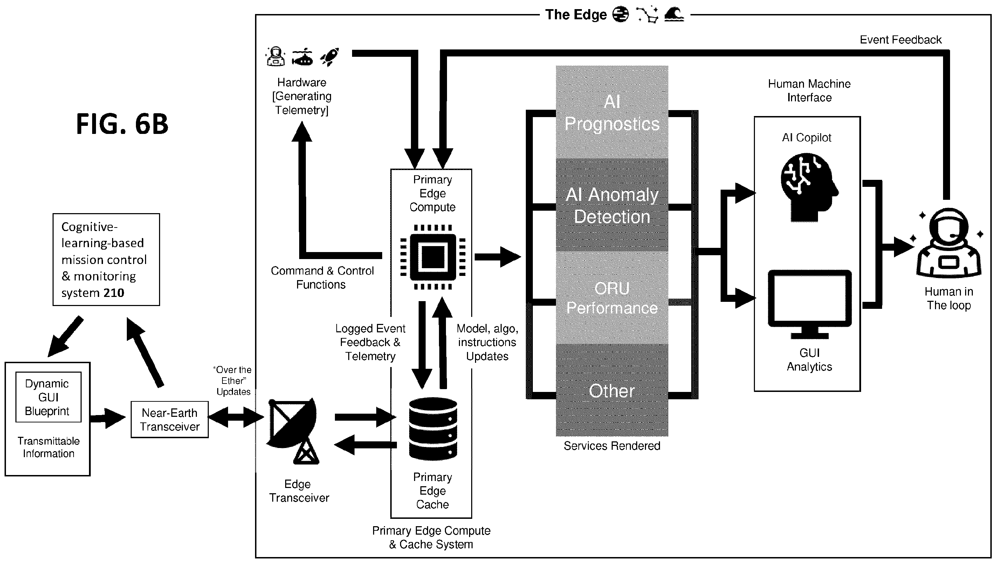

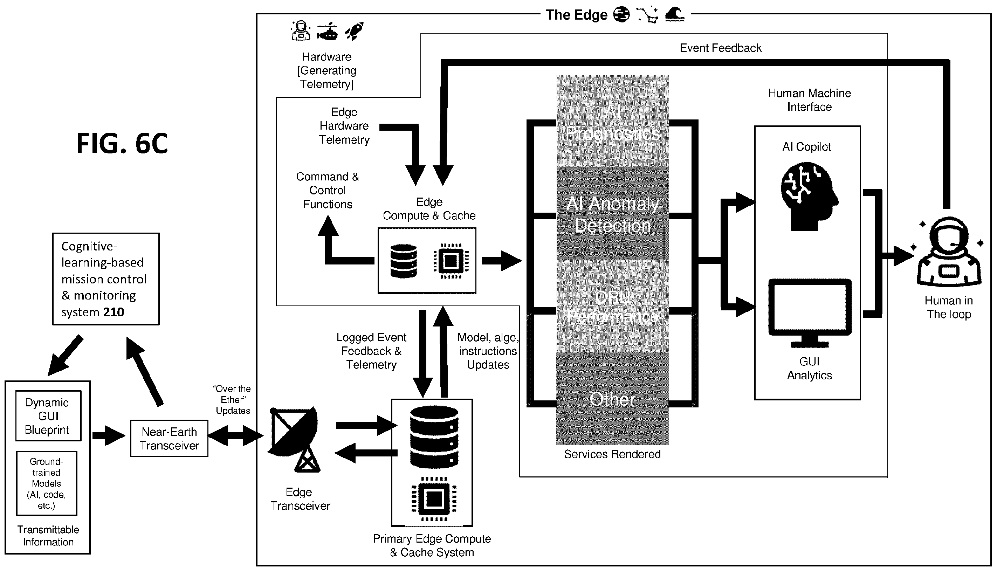

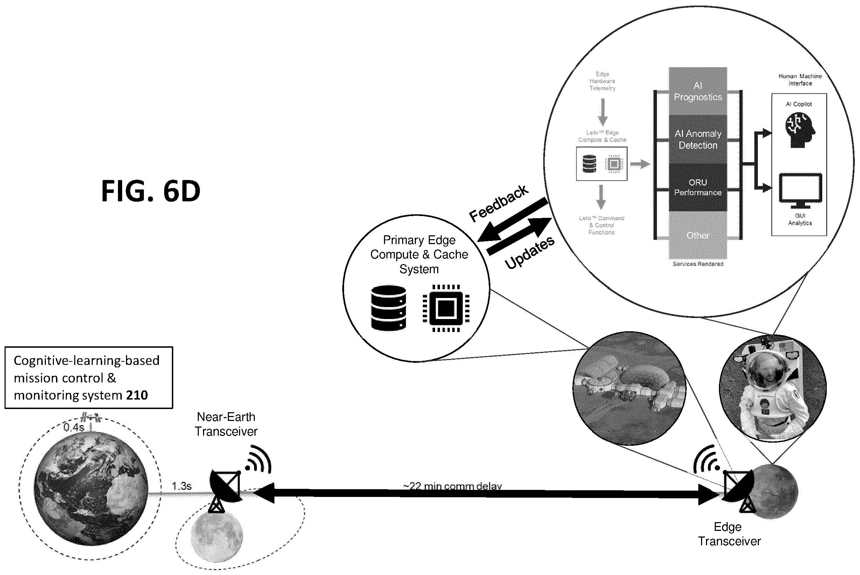

FIG. 6A depicts a simplified block diagram illustrating a non-limiting example of how the deep-space end-user MAC system 440A (shown in FIG. 4B) can be implemented as a deep-space end-user MAC station 440B, and further illustrates a non-limiting example of how the interface 442A (shown in FIG. 4B) can be implemented as an interface 442B. The interface 442B includes an edge cache 450A, and ground-trained models 454A that correspond to the model updates transmitted from the NP station B to the deep-space station A shown in FIG. 3. The deep-space end-user-based MAC system 440B includes an edge compute module or processor 460A, a services rendered module 462A that houses various ML models (e.g., AI prognostics, AI anomaly detection, ORU performance, and others), an AI copilot module 464A, and a HMI module 466A, configured and arranged as shown. In some embodiments of the disclosure, the deep-space end-user-based MAC system 440B can be embedded and/or contained in the edge-deployed products 468A. The SME 242A can be an astronaut/SME that interfaces and/or interacts with the deep-space end-user-based MAC system 440B. In some embodiments of the disclosure, the astronaut/SME can interface and/or interact with an instance of the deep-space end-user-based MAC system 440B embedded in a spacesuit (e.g., one of the deployed products 468A) worn by the astronaut/SME. Alternative embodiments of the system shown in FIG. 6A are shown in FIGS. 6B, 6C and 6D, which illustrate configurations where the Edge Cache is onboard the edge deployed product (FIG. 6B) or separate from the edge deployed product (FIG. 6C and/or FIG. 6D).

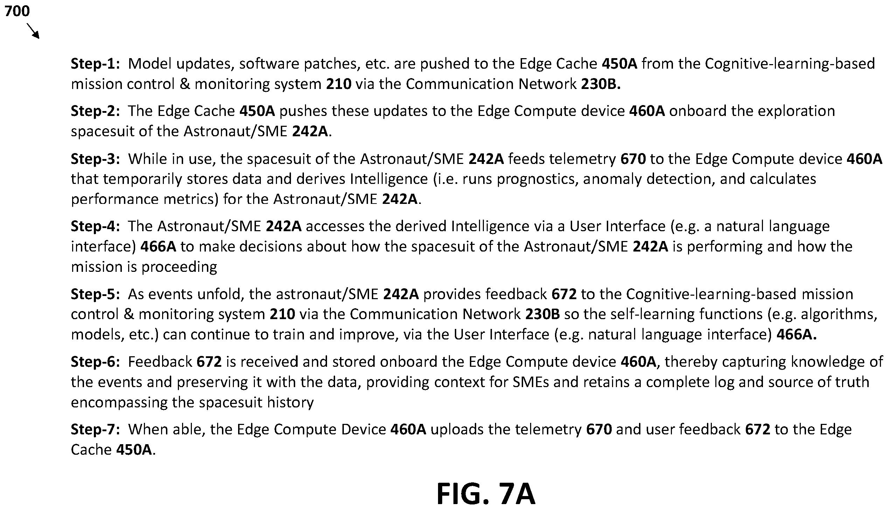

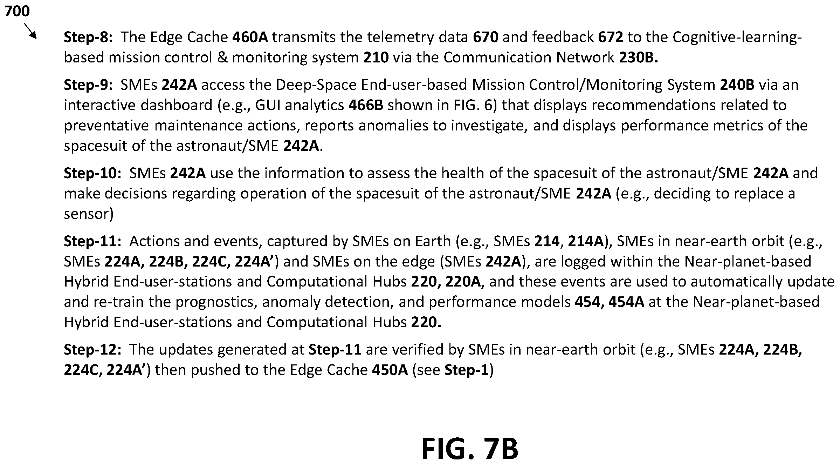

The operation of the interface 442B and the deep-space end-user MAC system 440B will now be described with primary reference to the methodology 700 shown in FIGS. 7A and 7B with references where appropriate to corresponding elements, processes, and illustrations in FIG. 6A. More specifically, the methodology 700 focuses on a more specific example where the astronaut/SME 242A is responding to and interfacing with electronic feedback and controls on the spacesuit worn by the astronaut/SME 242A. Turning first to FIG. 7A, the methodology 700 begins at Step-1 where model updates, software patches, etc. are pushed to the Edge Cache 450A from the CBL MAC 210 via the Communication Network 230B. At Step-2, the Edge Cache 450A pushes these updates to the Edge Compute device 460A onboard the exploration spacesuit of the Astronaut/SME 242A. At Step-3, while in use, the spacesuit of the Astronaut/SME 242A feeds telemetry 670 to the Edge Compute device 460A that temporarily stores data and derives Intelligence (i.e., runs prognostics, anomaly detection, and calculates performance metrics) for the Astronaut/SME 242A. At Step-4, the Astronaut/SME 242A accesses the derived Intelligence via a HMI 466A to make decisions about how the spacesuit of the Astronaut/SME 242A is performing and how the mission is proceeding. At Step-5, as events unfold, the astronaut/SME 242A provides feedback 672 to the CBL MAC 210 via the Communication Network 230B so the self-learning functions (e.g., algorithms, models, etc.) can continue to train and improve, via the HMI module 466A. At Step-6, feedback 672 is received and stored onboard the Edge Compute device 460A, thereby capturing knowledge of the events and preserving it with the data, providing context for SMEs and retains a complete log and source of truth encompassing the spacesuit history. At Step-7, when able, the Edge Compute Device 460A uploads the telemetry 670 and user feedback 672 to the Edge Cache 450A.

Turning next to FIG. 7B, at Step-8: The Edge Cache 460A transmits the telemetry data 670 and feedback 672 to the CBL MAC 210 via the Communication Network 230B. At Step-9, SMEs 242A access the Deep-Space End-user-based MAC 240B via an interactive dashboard (e.g., HMI module 466A shown in FIG. 6A) that displays recommendations related to preventative maintenance actions, reports anomalies to investigate, and displays performance metrics of the spacesuit of the astronaut/SME 242A. At Step-10, SMEs 242A use the information to assess the health of the spacesuit of the astronaut/SME 242A and make decisions regarding operation of the spacesuit of the astronaut/SME 242A (e.g., deciding to replace a sensor). At Step-11, actions and events, captured by SMEs on Earth (e.g., SMEs 214, 214A), SMEs in near-earth orbit (e.g., SMEs 224A, 224B, 224C, 224A') and/or SMEs on the edge (SMEs 242, 242A), are logged within the Near-planet-based Hybrid End-user-stations and Computational Hubs 220, 220A, and these events are used to automatically update and re-train the prognostics, anomaly detection, and performance models 454, 454A at the Near-planet-based Hybrid End-user-stations and Computational Hubs 220. In some embodiments of the disclosure, at Step-11, SMEs on Earth (e.g., SMEs 214, 214A) and/or SMEs in near-earth orbit (e.g., SMEs 224A, 224B, 224C, 224A') can send communications and recommended actions over the communications paths 230A to the SMEs on the edge (SMEs 242A). At Step-12, the updates generated at Step-11 are verified by SMEs in near-earth orbit (e.g., SMEs 224A, 224B, 224C, 224A') then pushed to the Edge Cache 450A (see Step-1).

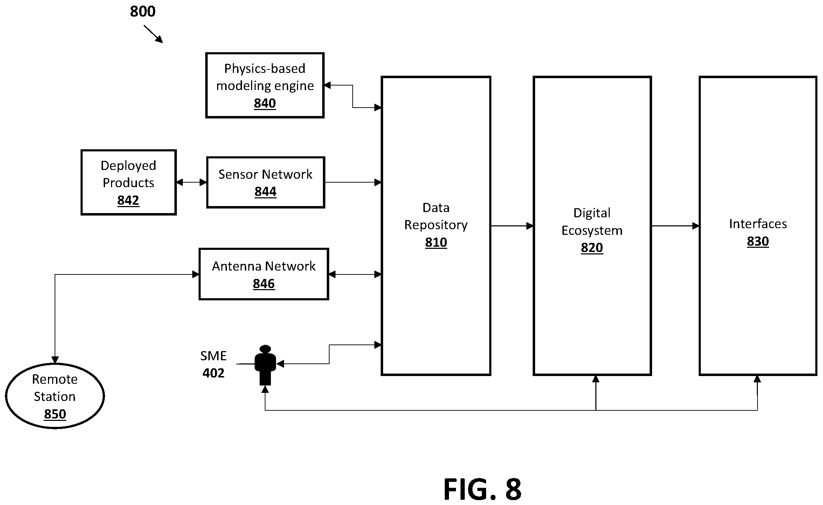

In embodiments of the disclosure, the near-earth MAC system 222A can be implemented as a novel cognitive, learning-based mission analysis and control system 800, which is shown in FIG. 8. The system 800 is operable to automatically monitor, analyze, and/or predict data end-to-end to detect trending and perform troubleshooting, and further operable to ingest and capture human expertise, which can be used for various purposes, including but not limited to augmenting self-learning functions. The near-Earth architecture of system 800 can harness the computational resources of Earth in that some or all of the computational resources of the system 800 can be located on Earth, thereby providing computational resources to spaceflight hardware without the restriction of limited computational power onboard existing products. The self-learning functionality of the system 800 enables the scaling of knowledge aggregation without reliance on limited data science and software engineering resources.

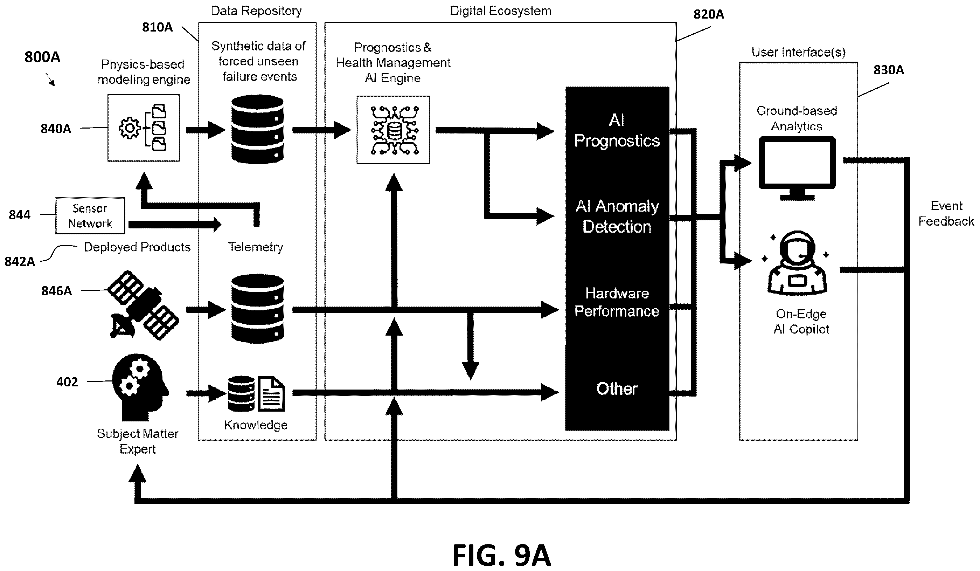

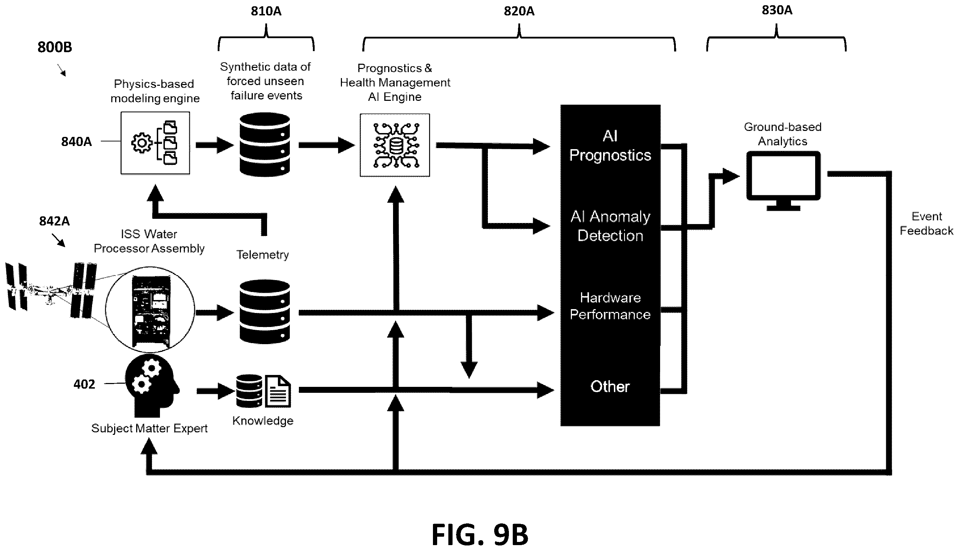

Exemplary embodiments of the disclosure implement the near-Earth architecture of system 800 as a novel cognitive, learning-based mission analysis and control system operable to automatically monitor, analyze, and/or predict data end-to-end to detect trending and perform troubleshooting, and further operable to ingest and capture human expertise, which can be used for various purposes, including but not limited to augmenting self-learning functions. More specifically, embodiments of the disclosure provide an architecture and methodology that includes interactions between telemetry-generating systems (e.g., physics-based models, deployed hardware, etc.), a data storage/repository system, algorithms and AI. In some embodiments of the disclosure, selected AI algorithms and other hardware monitoring/support systems can reside in a digital ecosystem. The architecture and methodology can further include interactions between, a computational system that accesses the digital ecosystem and presents a human-machine-interface (computer screen, audio, etc.) and humans for the sake of providing health monitoring (prognostics, anomaly, performance, etc.) and management for mission hardware. The system captures and retains data generated and created by mission hardware and human subject matter experts. The collected data is used to create, through the use of artificial intelligence and other algorithms, digital twins of both the hardware and humans that interact with the system. As new data is created, the system autonomously self-learns and updates the digital twins, algorithms, and artificial intelligence such that the virtual representations are current state-of-the-art. Non-limiting examples of these features are depicted in FIGS. 8, 9A, and 9B and are described in more detail subsequently herein.

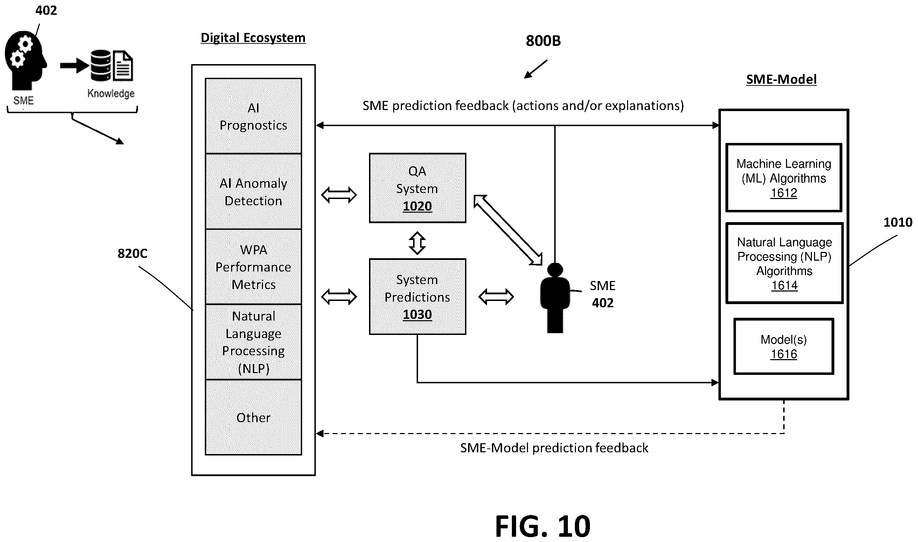

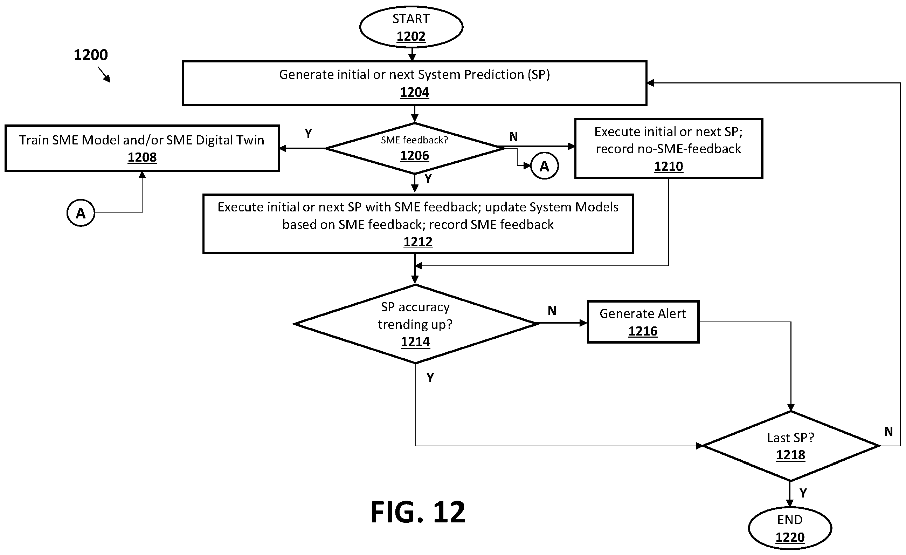

In addition to any one or more of the features described herein, the disclosed system and methodology further enable human (e.g., subject matter experts (SMEs)) knowledge capture and retention to provide context to the stored telemetry. Non-limiting examples of these features (human-in-the-loop verification; data labeling; and crowd-sourced training) are depicted at FIGS. 10 and 12 and are described in more detail subsequently herein.

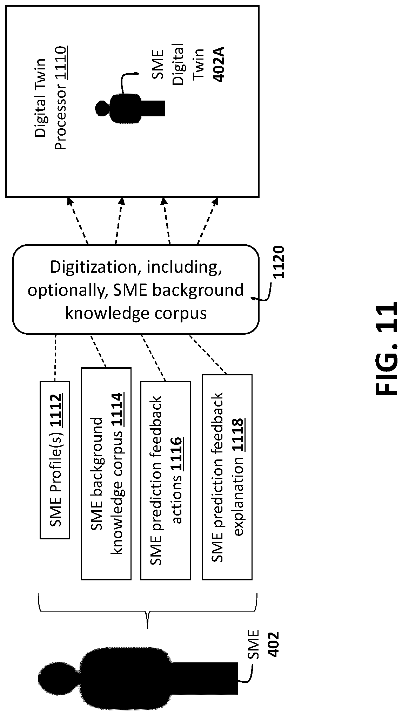

In addition to any one or more of the features described herein, the disclosed system and methodology further include AI and other algorithms operable to create a virtual replica (e.g., a digital twin) of the SME. In some embodiments of the disclosure, the above-described human/SME knowledge capture and retention can be combined into a knowledge base and used to create a comprehensive, composite virtual SME. In some embodiments of the disclosure, the virtual SME is interacted with in the form of a chat bot, NL interface, or graphical user interface (GUI). Non-limiting examples of these features are depicted at FIG. 11 and are described in more detail subsequently herein.

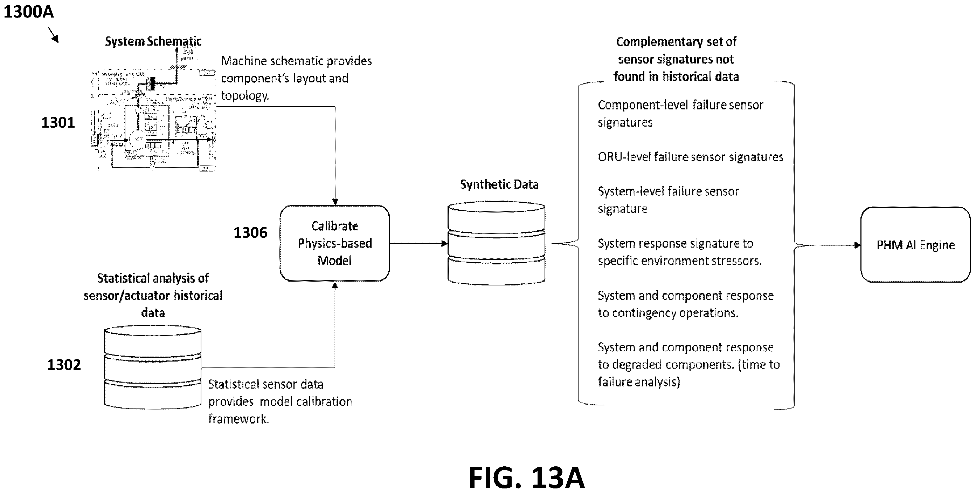

In addition to any one or more of the features described herein, the disclosed system and methodology further include using the previously-described digital twins to generate synthetic data for unseen failure modes. In embodiments of the disclosure, digital twins of the hardware being monitored are used to generate synthetic data of specific events that are not observable, or rare to observe, in the actual telemetry. In some embodiments of the disclosure, the synthetic data sets are used to train AI algorithms and other algorithms to detect, predict, and/or understand the unseen or rare events. Non-limiting examples of these features are depicted at FIGS. 13A-13D and are described in more detail subsequently herein.

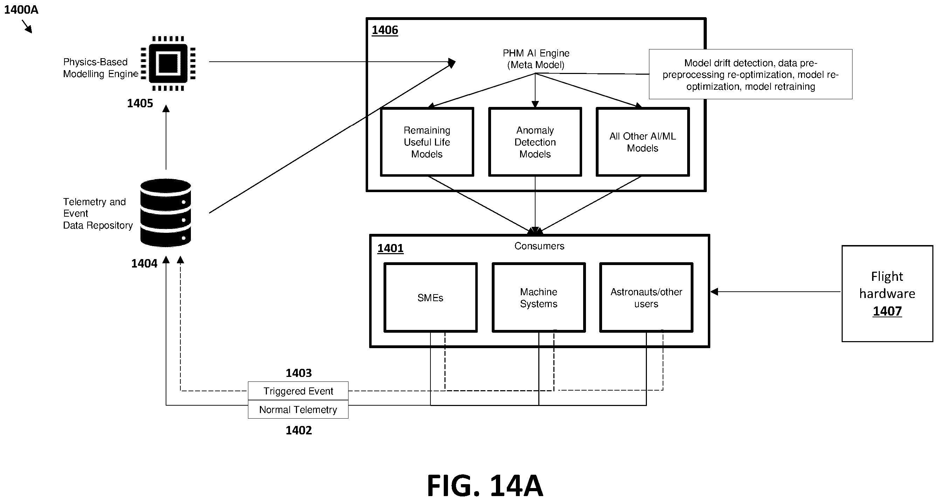

In addition to any one or more of the features described herein, the disclosed system and methodology includes an AI engine process that provides multiple paths for consumers (e.g., consumers 1401 shown in FIG. 14A) to ingest information from either a PHM AI Engine meta model (e.g., PHM AI Engine meta model 1406 shown in FIG. 14A) or flight hardware (e.g., flight hardware 1407). Upon receiving this information, the consumers can either consume the information terminally, that is, and not flow further information back to through to the AI engine process, or the consumers can interact/pass through further data through the system. In the event that the consumer wishes/is commanded to flow information back through the AI engine process, there are at least two channels through which the data can be sent. First, the data can be sent back as normal telemetry (e.g., telemetry 1402 shown in FIG. 14A), that is, with the intent for the data to be migrated back to the telemetry and data repository (e.g., telemetry and data repository 1404 shown in FIG. 14A) for storage purposes, but no immediate action. Second, data can be sent back as triggered event telemetry (e.g., triggered event telemetry 1403), that is, with the intent for the data to be migrated back to the telemetry and data repository with the desire for immediate action to be taken. In the event that the data flowed through the AI engine process is sent through the triggered event channel, the PHM AI Engine metamodel will use that trigger and new data to automatically begin some set of task events (updating/retraining existing models, entirely rebuilding existing models, performing model prediction drift detection, and the like). Non-limiting examples of these features are depicted at FIG. 14A and are described in more detail subsequently herein.

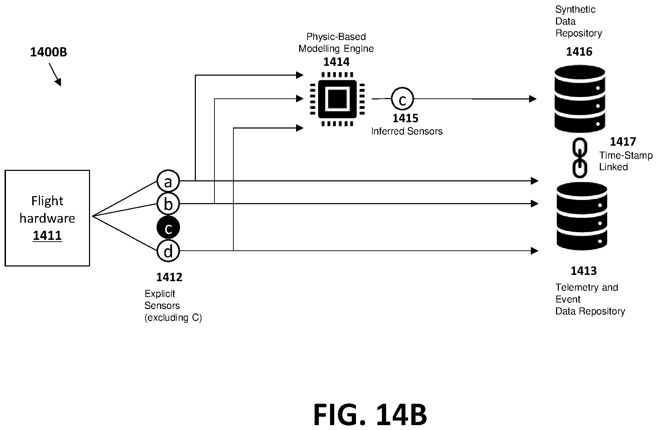

In addition to any one or more of the features described herein, the disclosed system and methodology further include a novel approach to sensors referred to herein as "synthetic sensors" (e.g., inferred sensors 1415 shown in FIG. 14B). For example, by using the a digital twins described herein, anything within the system can be measured and observed, whereas on a real system, the number of sensors and measurements is often constrained. Through the use of AI and algorithms, embodiments of the disclosure enable various measurements to be learned (e.g., using concurrent/inferred synthetic sensors 1415 shown in FIG. 14B) as they relate to the actual sensors on the hardware, which enables the values of "virtual" measurements on the real system to be determined where no sensor exists to actually observe the measurement. In some embodiments of the disclosure, the disclosed synthetic/inferred sensors can be used to generate additional data that can be used to train AI and other algorithms of the system, as well as perform diagnostics on system hardware (e.g., deployed products 842 shown in FIG. 8). Non-limiting examples of these features are depicted at FIG. 14B and are described in more detail subsequently herein.

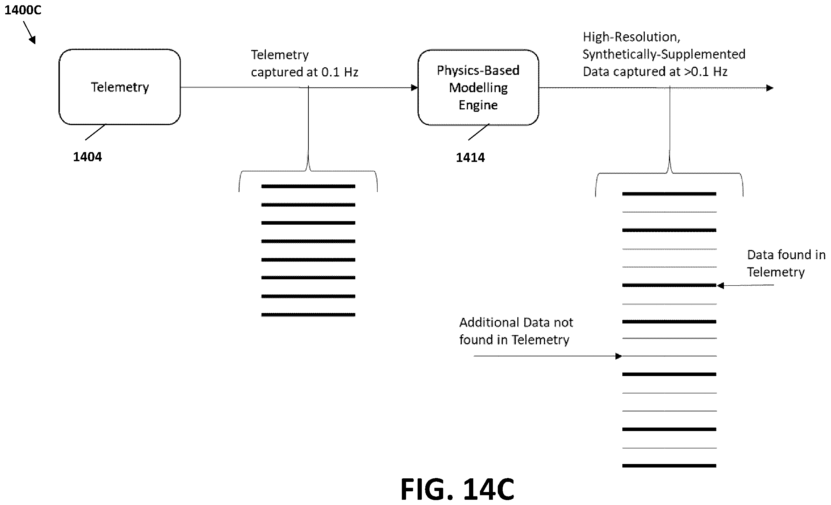

In addition to any one or more of the features described herein, the disclosed system and methodology further include a novel use of the disclosed digital twins to enhance data sampling frequency. In some embodiments of the invention, the disclosed digital twins are used to enhance the sampling frequency by essentially filling in the gaps in the data sets for hardware which generates data at low sampling rates. For example, where a given hardware device provides one data point once a minute, embodiments of the disclosure provide models that provide accurate data points associated with the given hardware device at one per second. Non-limiting examples of these features are depicted at FIG. 14C and are described in more detail subsequently herein.

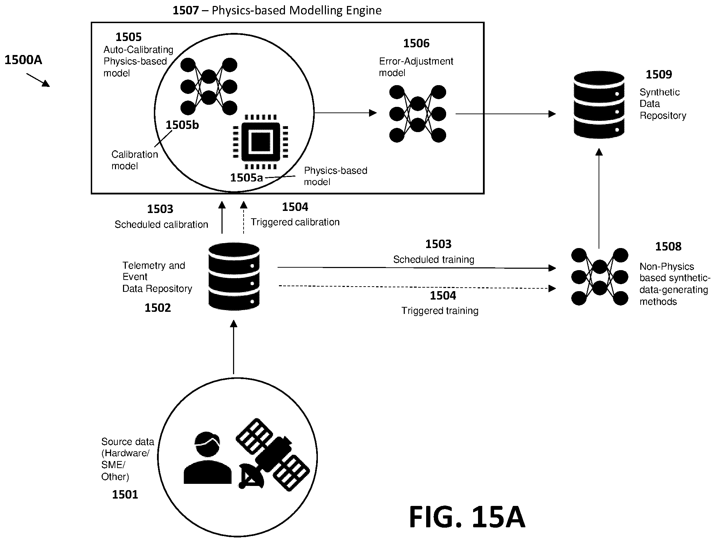

In addition to any one or more of the features described herein, the disclosed system and methodology further include novel self-calibrating digital twins in which the self-learning elements of the disclosed system and methodology uses AI and/or other algorithms to automatically recalibrate the digital twin(s) based on incoming telemetry, thereby synchronizing the digital twin to be representative of the real hardware. Non-limiting examples of these features are depicted at FIG. 15A and are described in more detail subsequently herein.

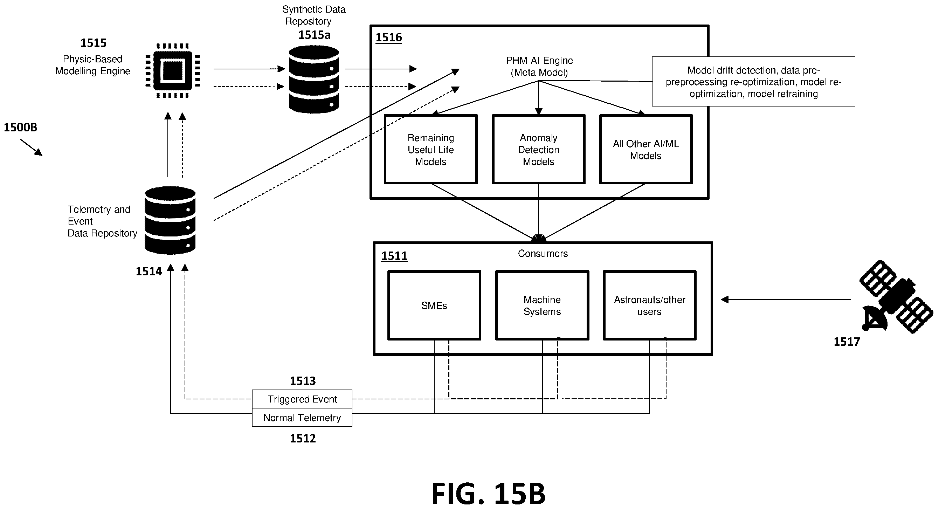

In addition to any one or more of the features described herein, the disclosed system and methodology further include novel schedules and event triggered retraining/calibration of digital twins and AI models. These features enable the disclosed system and methodology to automatically update the relevant algorithms/models in the digital ecosystem (e.g., digital ecosystem 820 shown in FIG. 8) including digital twins and PHM-related AI algorithms based on scheduled, human, or machine-triggered events. Non-limiting examples of these features are depicted at FIG. 15B and are described in more detail subsequently herein.

Returning now to FIG. 8, the novel cognitive, learning-based mission analysis and control system 800, in accordance with aspects of the disclosure, is operable to support a variety of mission or exploration types including land-based, underground, water-based, earth-atmosphere-based, and space-based travel for a variety of purposes, including, for example, military activities, defense activities, and/or learning about such regions. Such missions/explorations have been on land having all types of terrains (e.g. mountains, caves, and the like); underground at various depths; through bodies of water at various depths; in the air within Earth's atmosphere; and beyond earth's atmosphere into space. The architecture of system 800 is operable to harness the computational resources of a remote station 850 in that some or all of the computational resources and architecture of the system 800 can be located on at the remote station 850, thereby providing computational resources to the various components of the system without the restriction of limited computational power that may be available for the mission/exploration. The self-learning functionality of the system 800 enables the scaling of knowledge aggregation without reliance on limited data science and software engineering resources.

The system 800 includes a data repository 810, a digital ecosystem 820, and user interfaces 830, configured and arranged as shown. In general, a digital ecosystem is a set of technologies that work together as a network/unit of digital devices to provide information about the overall system. The digital ecosystem 820 includes various computer-based monitoring and control systems configured and arranged to perform cognitive, learning-based mission analysis and control operations that automatically monitor and analyze sensed operational data to detect trending and perform troubleshooting associated with various deployed products 842 and other mission/exploration systems associated with a given mission/exploration. The computer-based monitoring and control systems of the digital ecosystem 820 include various configurations and types of AI systems.

The data repository 810 is configured and arranged to automatically ingest various data types (e.g., sensed operational data) from various data sources, including a physics-based modeling engine 840, deployed products 842 (through a sensor network 844), the remote station 850 (through the antenna network 846), and at least one subject matter expert (SME) 402. In some embodiments of the disclosure, the remote station 850 is positioned locally with the mission, and the main system architecture elements of the system 100 are positioned at the remote station 850. In embodiments of the disclosure, the digital ecosystem 820 includes components and functionality operable to automatically display messages, inquiries, and other prompts to the SME 402 to ensure that the SME 402 inputs SME knowledge, including both SME decisions and SME rationales for SME decisions, into the systems. In some embodiments of the disclosure, the data repository 810 can provide data to the physics-based modeling engine 840 trained to generate synthetic data of system behaviors, especially unseen/infrequent failure events and unseen/infrequent machine states, that can also be stored in the data repository 810. The synthetic data is information that's artificially manufactured rather than generated by real-world events. It's created algorithmically and is used as a stand-in for test data sets of production or operational data to validate mathematical models of the digital ecosystem 820 and to train machine learning (ML) models of the digital ecosystem 820. The physics-based (or physics-informed) modeling engine(s) 840 are modeling engines configured and arranged to include physics-based constraints (e.g., the governing equations that describe the physics of the relevant phenomenon that is the subject of the physics-based modeling engine). These equations represent additional training information about the relationships between the input parameters to the model and the output(s) of the model.

The interfaces 830 of the system 800 can be implemented in a variety of user interface (UI) configurations. The interfaces 830 of the system 800 are configured and arranged to consume insights generated through the digital ecosystem 820 and provide human-in-the-loop feedback to the self-learning functions of the system 800. The interface 830 of the system 800 can include, for example, and digital assistants operable to provide a real-time query-and-response (voice-to-voice, text-to-voice, voice-to-text, or text-to-text) or request-to-action agent located on the edge (i.e. at the point of use location by the user). The digital assistants can include AI-based functionality that can query for any information in the digital ecosystem 820 (and potential information outside of the digital ecosystem 820) via a voice or text prompt and receive a corresponding answer. Additionally, a user of the AI-based digital assistant can, responsive to a request, perform actions (e.g. a request to log that some event has occurred in the data repository 810). Effectively, the AI-based digital assistant provides specialized capabilities related to mission/exploration data and actions. The AI-based digital assistant's functions can also be accessed and used by support personnel (e.g. mission control) at the remote station 850, as well as by the SMEs 402 to query information and provide feedback to the digital ecosystem 820.

FIG. 9A depicts a novel cognitive, learning-based mission analysis and control system 800A in accordance with aspects of the disclosure. The system 800A is a non-limiting example of how the system 800 (shown in FIG. 8) can be implemented in an application where the mission/exploration is a space-based mission/exploration, including specifically a space-based mission/exploration that uses computing resources and human personnel to monitor space mission hardware for both human-bearing and non-human bearing spacecraft. In the system 800A, the data repository 810 (shown in FIG. 8) is implemented as a data repository 810A; the digital ecosystem 820 (shown in FIG. 8) is implemented as a digital ecosystem 820A; and the user interface 830 (shown in FIG. 8) is implemented as a user interface 840A.

The system 800A is operable to support space exploration with an emphasis on, though not limited to, optimizing the operation of deployed products 842A such as flight systems and/or environmental control systems and life support systems (ECLSS)). The ECLSS is a system of regenerative life support hardware that engages in all varieties of necessary functions (air revitalization, temperature control, humidity control, biological waste management, water generation, etc.) to sustain and preserve life present in any spacecraft (space stations, spacesuits, space transit vehicles, etc.) or space habitat. The creation of the ECLSS allows for the accommodation of more crew in space, extends the time crew can stay in space, and significantly reduces overall operating costs by recycling resources. The ECLSS onboard the International Space Station (ISS) includes two main components - the water recovery system (WRS) and the oxygen generation system (OGS). The WRS provides clean water by recycling crewmember urine, cabin humidity condensate, and EVA (extra vehicular activity) wastes. The reclaimed water must meet stringent purity standards before it can be utilized to support the crew, laboratory animals, EVA, and payload activities. The WRS includes a UPA (urine processing assembly) and a WPA (water processor assembly). The OGS produces oxygen for breathing air, as well as replaces oxygen lost as a result of experiment use, airlock depressurization, module leakage, and carbon dioxide venting. The OGS includes an OGA (oxygen generation assembly) and a PSM (power supply module). Oxygen is generated at a selectable rate and is capable of operating continuously and cyclically.

The system 800A is a near-Earth architecture that can harness the computational resources of Earth in that some or all of the computational resources of the system 800A can be located on Earth, thereby providing computational resources to spaceflight hardware without the restriction of limited computational power onboard existing products. In general, near-Earth refers to the orbital region of space from Earth to the Earth's Moon, including low-earth orbits, medium-earth orbits, medium-earth orbits, and high-earth orbits. In embodiments of the disclosure, the computational resources on Earth can be implemented as the remote station 850 (shown in FIG. 8) in communication with and antenna network 852A. The self-learning functionality of the system 800A enables the scaling of knowledge aggregation without reliance on limited data science and software engineering resources.

Referring still to FIG. 9A, the system 800A includes a data repository 810A, a digital ecosystem 820B, and user interfaces 830A, configured and arranged as shown. The data repository 810A (e.g. an SQL server) of the system 800A is configured and arranged to automatically ingest flight telemetry (e.g., from deployed products 842A through a distributed Sensor Network 844, which can include smart sensors having on-board processor functionality) and subject matter expert (SME) knowledge. In embodiments of the disclosure, the system 800A includes components and functionality (e.g., the digital ecosystem 820C shown in FIG. 10) operable to automatically display messages, inquiries, and other prompts to SMEs 402 to ensure that SMEs input SME knowledge, including both SME decisions and SME rationales for SME decisions, into the system 800A. In some embodiments of the disclosure, telemetry can be provided to one or more physics-based modeling engines 840A trained to generate synthetic data of system behaviors, especially unseen/infrequent failure events and unseen/infrequent machine states, that can also be stored in the data repository 810A. The synthetic data is information that's artificially manufactured rather than generated by real-world events. It's created algorithmically and is used as a stand-in for test data sets of production or operational data to validate mathematical models and to train machine learning (ML) models. The physics-based (or physics-informed) modeling engine(s) 840A are modeling engines configured and arranged to include physics-based constraints (e.g., the governing equations that describe the physics of the relevant phenomenon that is the subject of the physics-based modeling engine 840A). These equations represent additional training information about the relationships between the input parameters to the model and the output(s) of the model.

In some embodiments of the disclosure, the synthetic data of unseen/infrequent failure events and machine states as well as the product telemetry are consumed by an artificial intelligence (AI) engine for the purpose of rapidly generating prognostics and health management (PHM) models of the underlying operating hardware. The PHM AI engine can be part of the digital ecosystem 820A and leverages the power of classic statistics, traditional statistical and machine learning, deep learning, reinforcement learning, and the like. The PHM AI engine is configured and arranged to provide real-time and ex post data analysis, including but not limited to, risk assessment, early fault diagnosis, system health prediction, sensor health prediction, and maintenance management in the system 800A. The PHM AI engine implements some or all of the AI Prognostics functionality of the digital ecosystem 820A and identifies machine health status and alerts users (e.g., SMEs, system maintenance personnel, and the like) to system degradation, and predicting when future maintenance will be required, suggesting optimal maintenance methods. Maintenance activities can be scheduled, thereby avoiding unexpected downtimes. The PHM AI engine also facilitates advanced planning for labor and spare parts management based on maintenance plans, thereby reducing repair times and improving the overall efficiency of how repair resources are used.

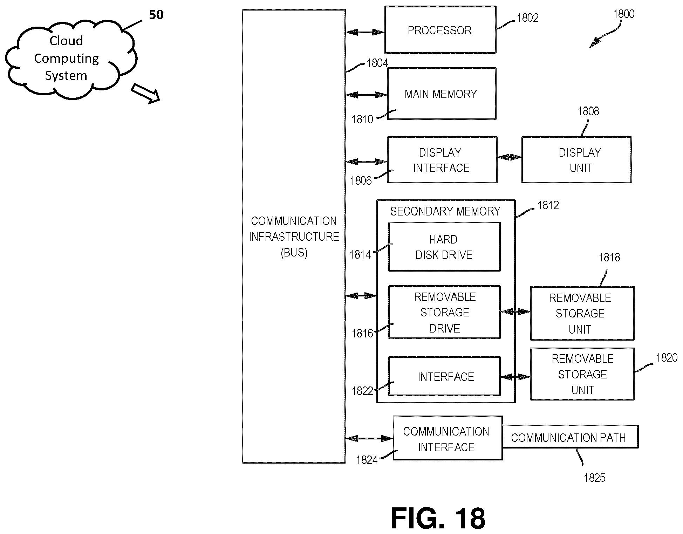

In some embodiments of the disclosure, the data repository 810A can be implemented as a searchable database operable to organize and store data from various sources in segments or regions of the data repository. The data repository 810A shown in FIG. 9A can be any form of database, including but not limited to, relational SQL databases, noSQL unstructured databases, unstructured data lakes, time-series databases, and the like, or any combination thereof. In some embodiments of the disclosure, the data repository 810A can include features and functionality of a relational database operably controlled by the computing system 1800 (shown in FIG. 18). In general, a database is a means of storing information in such a way that information can be retrieved from it, and a relational database presents information in tables with rows and columns. A table is referred to as a relational table in the sense that it is a collection of objects of the same type (rows). Data in a table can be related according to common keys or concepts, and the ability to retrieve related data from a table is the basis for the term relational database. A database management system (DBMS) of the computing system 1800 controls the way data in the data repository is stored, maintained, and retrieved. A database management system of the computing system 1800 performs the tasks of determining the way data and other information (e.g., natural language text descriptions of prediction feedback provided by an SME) are stored, maintained, and retrieved from the data repository.

The Sensor Network 844 is a distributed Sensor Network having one or more sensor components coupled to some or all of the components of the deployed products 842A of the system 800A that generate date and information about the various operations performed by the deployed products 842A within the system 800A. The wide availability and relatively low cost of miniaturized computing systems has significantly increased the ability of distributed sensor networks (e.g., the sensor network 844) to gather electronic information and/or data about any activity of the system 800A that can be monitored and stored using technology. The gathered electronic information/data is generally referred to as raw information/data and is captured/stored in a variety of information formats. In general, raw data is data that has not been processed, coded, formatted, or yet analyzed for useful insights. In other words, raw data is data that has been collected from one or multiple sources but is still in its initial, unaltered state. In some embodiments of the disclosure, raw data/information gathered from the system 800A by the distributed Sensor Network 844 is stored in the data repository in raw form, and downstream data preprocessing techniques are used to prepare the data/information for analysis by the various data analysis components (e.g., components of the Digital Ecosystem 820A). In some embodiments of the disclosure, the preprocessing techniques are applied by the digital ecosystem 820A either before or right after the raw data/information gathered from the system 800A by the distributed Sensor Network is stored in the data repository.

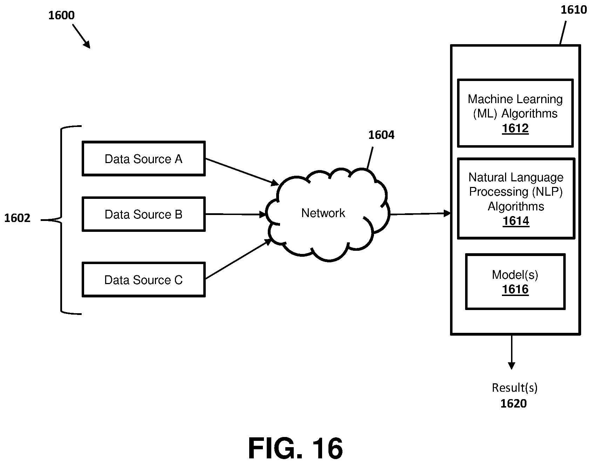

The digital ecosystem of the system 800A is operable to use the data and/or information (including both structured and unstructured data) generated by a variety of sources to generate insights on product performance via analytics, prognostics, anomaly detection, probabilistic event explanations, and the like. Embodiments of the disclosure utilize a variety of cognitive computing systems, including but not limited to, artificial intelligence (AI), algorithms, models, code libraries, logic, rules, etc. to analyze the data and/or information to generate insights on product performance via analytics, prognostics, anomaly detection, probabilistic event explanations, and the like. Examples of the basic features and functionality of computing systems and AI algorithms that can be used to implement aspects of the disclosure are depicted in FIGS. 16-18 and described in greater detail subsequently herein.

Because of the variety of types of data/information that will be analyzed by the digital ecosystem, the cognitive computing systems of the digital ecosystems include the capability to ingest and analyze a variety of types of data/information, including but not limited to structured data, text documents, images, recorded audio, chat logs, etc. For example, the cognitive computing systems of the digital ecosystem include natural language processing (NLP) functionality. NLP is a field of computer science that uses algorithms and computer systems to process human languages such as English. Human language is often referred to as natural language. In general, the terms "natural language" refer to language that has been developed by humans over time as a method of communicating between people, rather than language that has been created for communication between non-human entities such as computers.

NLP is used in systems that allow humans to more effectively interface with data repositories that store electronic information. NLP interfaces/systems have been developed to perform a variety of human/data interface tasks such as text-searching and/or text-matching, as well as more sophisticated tasks such as document/data content analysis (DCA). In general, DCA systems conduct computer-assisted research and analysis using the categorization and classification of speech, written text, interviews, images, or other forms of electronically stored sources of information. A known type of DCA is so-called a "question and answer (QA) system" that use NLP, machine learning algorithms and a variety of language models (e.g., large language models (LLMs)) to cognitively analyze a variety of stored sources of information in order to provide answers to open-ended natural language questions.

In some embodiments of the disclosure, a "Question and Answer" (QA) system (e.g., QA system 1020 shown in FIG. 10) is used in a novel way to facilitate the SME inserting useful and complete information to the digital ecosystem and/or the data repository. The resultant information/data extracted via the QA system is then integrated into the overall body of data to be consumed in training by the AI engine and used for the development of further analytics. For example, the QA system of the digital ecosystem can be trained to evaluate the sufficiency SME prediction feedback provided in the form of NL text, then formulate and present to the SME a follow up request/question that it targeted to elicit additional information that makes the SME NL prediction feedback more meaningful. For example, if the digital ecosystem generates a prediction that valve A is showing signs that it will fail in 2 months so should be replaced/repaired, the SME can override this prediction and provide to the digital ecosystem an SME NL prediction feedback explanation that reads "valve A will not need to be replaced for at least another 12 months; set a reevaluation of valve A for 10 months from now." The QA system can evaluate the sufficiency of this SME NL prediction feedback explanation, determine that it is insufficient in that it does not provide any details about why the SME has drawn this conclusion, and formulate a NL request that asks the SME to provide an explanation of why the SME came to his/her conclusion about when valve A will need to be repaired. For example, the SME may understand from attending a recent seminar that the best predictor of valve A failure is performance parameter A. The SME queries the digital ecosystem to provide the current value of parameter A, reference a set of guidelines the SME has obtained at the seminar that translates a current value of parameter A to a future repair time, and determined from that source that valve A will sustain its performance for at least the next 12 months. In response to the NL request from the QA system, the SME can provide some or all of the above-described rationale to the QA system. The QA system can be further configured or trained to evaluate the sufficiency of the response to its request for additional information and continue to pose follow-up questions until the QA system determines that it has received a sufficient response. In embodiments of the disclosure, the QA system can be configured to measure sufficiency based on "what," "why," and "sources" standards. The "what" standard evaluates whether there is clarity on what the SME wants the action or inaction to be; the "why" standard evaluates whether a suitable rationale has been provided for the "what" portion of the SME response; and the "sources" standard evaluates whether the SME has provided a source for the "what" and "why" portions of the SME response. Additional details of how the system 800A interacts with SMEs in accordance with embodiments of the disclosure are depicted in FIGS. 3-5 and described in greater detail subsequently herein.

The cognitive computing system of the digital ecosystem can further include general data science functionality and anomaly detection capabilities, including but not limited to, math, statistics, specialized programming, advanced analytics, artificial intelligence (AI), and machine learning (ML), and specific subject matter expertise for the purpose of uncovering actionable insights hidden in the data, predicting future performance/events, identifying hidden patterns and relationships, creating autonomous decision systems, etc. The insights can be used to guide decision making and strategic planning. An important consideration in data science is the quality of the data to be analyzed. Data quality can be impacted by so-called "anomaly" or "outlier" data. The term "anomaly" refers to a data point or a set of data points that diverges dramatically from expected samples and patterns for their type. For a dataset that follows a standard bell curve, the anomalies are the data on the far right and left. Anomalies can indicate fraud or some other anomaly, but they can also be measurement errors, experimental problems, or a novel, one-off instance. Anomalies and/or outliers can hamper data analysis techniques and skew analysis results.

Anomaly detection is the process of detecting anomalous behavior of a system or device for purposes of diagnosing a source of the anomalous behavior and, potentially, taking corrective action to address the anomaly. In embodiments of the disclosure, anomaly detection functionality determines when the hardware that is being monitored by system 800A, displays anomalous behavior based on the data that is received depicting the hardware performance. The intent of the anomaly detection functionality is to make sure that problems with the hardware are detected by the anomalous signature(s) in the data. As a non-limiting example, for image domains, anomaly detection processes can be used in quality control operations to inspect surfaces to identify unacceptable defects or imperfections in an associated product. Anomaly detection uses mathematical techniques to detect abnormalities within a dataset (e.g., a dataset that represents an image) based on how different a given data point is from its surrounding data points or from a standard deviation. Anomaly detection tasks can be performed by neural networks using deep learning algorithms. Some deep learning algorithms require large amounts of labeled (annotated) data to learn so-called "deep features" in order to train effective models for the performance of cognitive operations such as prediction, classification, and the like. However, in many anomaly detection deep learning applications, labeled anomalous training data is not available or not abundant due to a variety of factors. Thus, so-called "zero-shot" learning techniques have been developed to train machine learning algorithms to perform classification and/or prediction tasks where the machine learning algorithm has not previously seen or been trained with examples of the actual classification/prediction task. In other words, zero-shot learning can enable a machine algorithm to perform classification/prediction tasks where examples of the actual to-be-predicted (TBP) data are "unknown" to the machine learning algorithm(s). In zero-shot learning, the classes covered by training instances and the classes that the classification/prediction task needs to classify are disjoint. Thus, zero-shot learning techniques are designed to overcome the lack of training examples in the classification/prediction task by leveraging details learned from training examples of a task that is related to but different from the subject classification/prediction task. The details learned from training examples of the related/different task are used to draw inferences about the unknown classes of the subject classification/prediction task because both the training classes and the unknown task classes are related in a high dimensional vector space called semantic space. Thus, known zero-shot learning techniques can include a training stage and an inference stage. In the training stage, knowledge about the attributes of intermediate semantic layers is captured; and in the inference stage, this knowledge is used to categorize instances among a new set of classes.

Another machine learning technique for performing zero-shot learning is known as "transfer learning." Transfer learning is a machine learning method where a model developed for a first task is reused as the starting point for a model on a second, different but related task. For example, in a deep learning application, pre-trained models are used as the starting point on a variety of computer vision and natural language processing tasks. Transfer learning leverages through reuse the vast knowledge, skills, computer, and time resources required to develop neural network models. Transfer learning techniques have been developed that leverage training data from a different but related domain in an attempt to avoid the significant amount of time it takes to develop labeled training data to train an anomaly detection model for a performing anomaly detection tasks in a subject domain. The domain of the TBP data is referred to as the target domain (TD), and the domain of the different but related task is referred to as the source domain (SD).

Embodiments of the disclosure use transfer learning to scale knowledge across products and platforms of the systems 800, 800A, 800B (shown in FIGS. 8, 2A, 2B). For example, a first cognitive algorithm model of the system 800A can transfer its learning to a second cognitive algorithm model of the system, where the first and second cognitive algorithm models are trained to perform task that have some overlapping areas and some non-overlapping areas. As another example, a model trained on water processor functions can be applied via transfer learning to another, similar water processor system on a different spacecraft.

The cognitive computing system of the digital ecosystem can further include general hardware performance analysis applied to one or more deployed products 842A (e.g., an ORU (on-orbit replaceable unit)). Such analysis refers to, but is not limited to, calculating and/or capturing information both explicit and non-explicit in the data related to hardware performance. Such analytics can include univariate and multivariate statistics of the sensors embedded on the hardware, calculated measures that cannot be explicitly observed in the telemetry, and analysis of relative/relational data in the hardware. Returning to an ECLSS example, for the water generation component of life support, such general hardware performance can include such things as statistical measures (mean, variance, minimum, maximum, skew, etc.) for all sensors on the system, how much water was generated over a given time and what the rate of production was, how much urine was distilled and converted back into potable water, how many times certain pumps engaged for the purposes of purifying water or to maintain system pressure, the correlations between various system components, slopes/trends/patterns/other behavioral information about the sensors and subsystems in the system, and the like.

User interface(s) (UIs) 830A of the system 800A are configured and arranged to consume digital ecosystem insights and provide human-in-the-loop feedback to the self-learning functions of the system 800A. UIs 830A of the system 800A can include, for example, graphical user interfaces (GUIs) (e.g. interactive WebApp, dashboard, mobile app, and the like); onboard hardware (e.g. ECLSS hardware, flight computer, spacecraft avionics, spacesuit heads-up display, etc.); and digital assistants (e.g. NL interfaces such as the QA system 1020 shown in FIG. 10; and the On-Edge AI Copilot shown in FIG. 9A). The On-Edge AI Copilot described in the embodiments of the disclosure refers to a real-time query-and-response (voice-to-voice, text-to-voice, voice-to-text, or text-to-text) or request-to-action agent located on the edge (i.e. at the point of use location by the user; e.g. inside the helmet of the spacesuit). The user (e.g., SME 402) of the AI copilot can query for any information in the digital ecosystem 820A (and potential information outside of the digital ecosystem) via a voice or text prompt and receive a corresponding answer. Additionally, the user of the AI copilot can request that the copilot perform actions (e.g., a request to log that some event has occurred in the data repository). Effectively, the AI copilot provides specialized capabilities related to mission data and actions. The AI copilot functions can also be accessed and used by earth-based support personnel (e.g. mission control at the remote station 850 shown in FIG. 8) and SMEs to query information and provide feedback to the digital ecosystem 820A.

FIG. 9B depicts an exemplary application of the system 800A (shown in FIG. 9A), where the system shown in FIG. 2B is designated as system 800B having substantially the same features and functionality as the system 800A. Referring now to a description of operational steps of an exemplary application the system 800B, telemetry from the ISS WPA (International Space Station water processing assembly) is streamed and collected at the data repository 810A. Scripts of the system 800B access the collected data and run prognostic models, anomaly detection algorithms, and calculates WPA performance metrics (e.g. daily water production) on the newly acquired telemetry. In embodiments of the disclosure, prognostic and anomaly detection AI models can be rapidly developed with an AI generation engine (e.g., the PHM AI engine) of the system 800B. In embodiments of the disclosure, events that have not yet occurred or are rarely observed in the data are simulated using the previously-described physics-based (or physics-informed) modeling engine 840A. SMEs access the system 800B via an interactive dashboard that recommends preventative maintenance actions, reports anomalies to investigate, and displays WPA performance metrics. SMEs 402 use the information to assess the health of the WPA and make decisions regarding WPA operation (e.g., deciding to change the multi-filtration bed). Actions and events (e.g., maintenance events) are logged within the system 800B and these events are used to automatically update and re-train the prognostics and anomaly detection models of the digital ecosystem 820A. Knowledge of the event is preserved with data, thereby providing context for future and/or affiliated workforce and retaining a complete log and source of system generated and SME generated knowledge encompassing the WPA product history.

FIG. 10 illustrates additional details about how the SME 402 interacts with the system 800, 800A, 800B. In FIG. 10, the Digital Ecosystem 820C of the system 800B is illustrated to show AI prognostics, AI anomaly detection, WPA performance metrics, NLP, and other learning-based functionality, configured and arranged as shown. FIG. 10 further depicts System Predictions functionality 1030 generated by the Digital Ecosystem 820C; a QA system 1020 in electronic communication with the Digital Ecosystem 820C and an SME-model 1010, configured and arranged as shown. Although System Predictions 1030 are referenced in FIGS. 3, 4 and 5, it is understood that the examples depicted in FIGS. 3, 4 and 5 and described herein apply to the more general example where the System Predictions are any type of output from the various analysis and cognitive computing systems of the system 800, 800A, 800B. In accordance with embodiments of the disclosure, the SME-model 1010 can be implemented in a variety of ways. In the example depicted in FIG. 10, the SME-model 1010 is implemented using ML algorithms 1612 and NLP algorithms 1614 to generate one or more models 1616 which functions as the SME-model 1010. Details of how the SME-model 1010 can be implemented are depicted in FIGS. 9 and 10 and described in greater detail subsequently herein.

In operation, the SME 402 can be one or more persons and is tasked with using his/her subject matter expertise to evaluate System Predictions 1030 generated by the system 800, 800A, 800B. Although depicted as System Predictions 1030, embodiments of the disclosure apply to a variety of analysis-related outputs from system 800, 800A, 800B that may or may not be an actual prediction (e.g., an anomaly detection, a prognosis, performance metrics, other metrics that can be used to evaluate how well a piece of equipment is functioning, and the like). In some embodiments of the disclosure, the system 800, 800A, 800B will require input from the SME 402 before finalizing and/or implementing the System Prediction 1030. The SME 402 generates, in response to the System Prediction 1030, SME prediction feedback that can take a variety of forms, including, for example, actions (an indication that the SME has reviewed the System Prediction 1030 and approved/rejected/modified it) and/or explanations (NL text specifying, for example, the actual approval/rejection/modification of the System Prediction 1030, the rationale behind the approval/rejection/modification, and any sources the SME 402 used in formulating the rationale). The SME predication feedback is provided to the Digital Ecosystem 820C and the SME-model 1010. The SME-model 1010 uses the SME prediction feedback and the System Predictions to train the SME-model 1010 to, in effect, provide SME-model prediction feedback that tracks the actual SME prediction feedback generated by the SME 402. The SME-model 1010 provides a mechanism to capture the knowledge of the SME 402 by capturing interactions the SME 402 has with the system 800, 800A, 800B and training the SME-model 1010 to, responsive to new System Predictions 1030, generate SME-model feedback that mimics the SME prediction feedback that would have been provided by the SME 402. The SME-model 1010 can be used in a variety of circumstances, including, for example, where the SME 402 is not available for a period of time (e.g., on vacation for a week), the SME-model 1010 can function as a substitute for the vacationing SME 402.

The Digital Ecosystem 820C receives the SME prediction feedback and provides it to the QA system 1020. The QA system 1020 is used in a novel way to facilitate the SME 402 inserting useful and complete information (e.g., through a graphical user interface (GUI)) into the various cognitive models of the Digital Ecosystem 820C and/or into the Data Repository 810, 810A. In some embodiments of the disclosure, information inserted into the QA system 1020 by the SME 402 can be inserted into the models of the Digital Ecosystem 820C as updated training data and used to generate updated model outputs of the Digital Ecosystem 820C (e.g., an updated model prediction). In some embodiments of the disclosure, the information inserted into the QA system 1020 by the SME 402 can be accumulated and used by NLP of the Digital Ecosystem 820C to generate and update a knowledge corpus of the SME 402 related to the system 800, 800A, 800B.

In some embodiments of the disclosure, the cognitive computing modules of the QA system 1020 of the Digital Ecosystem 820C can be trained to evaluate the sufficiency of the SME prediction feedback provided in the form of natural language (NL) text, audio, and the like, then formulate and present to the SME 402 a follow up request/question that is targeted to elicit from the SME 402 additional information that makes the SME NL prediction feedback more meaningful. For example, if the Digital Ecosystem 820C generates a prediction that valve A is showing signs that it will fail in two (2) months and therefore should be replaced/repaired, the SME 402 can override this prediction and provide to the Digital Ecosystem 820C an SME NL prediction feedback explanation that reads "valve A will not need to be replaced for at least another 12 months; set a reevaluation of valve A for 10 months from now." The QA system 1020 can evaluate the sufficiency of this SME NL prediction feedback explanation, determine that it is insufficient in that it does not provide any details about why the SME 402 has drawn this conclusion, and formulate a NL request that asks the SME 402 to provide an explanation of why the SME 402 reached this conclusion about when valve A will need to be repaired. For example, the SME 402 can have learned from attending a recent seminar that the best predictor of valve A failure is performance parameter A. The SME 402 then, unbeknownst to the QA system 1020, queried the system 800, 800A, 800B to provide the current value of parameter A, referenced a set of guidelines the SME 402 obtained at the seminar that translates a current value of parameter A to a future repair time, and determined from that source that valve A will sustain its performance for at least the next twelve (12) months. In response to the NL request from the QA system 1020, the SME 402 can provide some or all of the above-described rationale to the QA system 1020. The QA system 1020 can be further configured or trained to evaluate the sufficiency of the response to its request for additional information and continue to pose follow-up questions to the SME 402 until the QA system 1020 determines that it has received a sufficient response from the SME 402. In some embodiments of the disclosure, the QA system 1020 can be configured to measure sufficiency in any suitable manner, including, for example, based on "what," "why," and "sources" standards. The "what" standard evaluates whether there is clarity on what the SME 402 wants the action or inaction to be; the "why" standard evaluates whether a suitable rationale has been provided for the "what" portion of the SME response; and the "sources" standard evaluates whether the SME 402 has provided a source for the "what" and "why" portions of the SME response. Additional details of how the system 800, 800A, 800B interacts with SMEs 402 in accordance with embodiments of the disclosure are depicted by the methodology 500 shown in FIG. 5 and described in greater detail subsequently herein.

In some embodiments of the disclosure, the SME-model 1010 depicted in FIG. 10 can be implemented by generating a digital twin of the SME 402. FIG. 11 depicts additional details of how an SME digital twin 402A of the SME 402 can be generated using a digitization module 1120 and a digital twin processor module 1110 in accordance with aspects of the disclosure. As shown the digitization module 1120 digitizes a variety of data types reflecting the SME's internal knowledge "domain", including, for example, SME profile data/information 1112, SME background knowledge corpus 1114 (e.g., relevant publications authored or read by the SME 402), SME prediction feedback action 1116, all historic SME email traffic, and SME prediction feedback explanations 1118. The digitization module 1120 provides the digitized data to the digital twin processor 1110 where known machine learning technologies and NLP technologies (e.g., large language models (LLMs)) are used to create and update the user digital twin 402A. Once trained, the SME digital twin 402A can be used in substantially the same way as the SME-model 1010, with the added benefit that new employees can then interact with the digital twin 402A for educational and assistance purposes. Both the SME-model 1010 and the SME digital twin 402A can include and utilize NLP/LLM functionality that enable a chat to be conducted with the SME-model 1010 and/or the SME digital twin 402A.

The operation of the system 800, 800A, 800B will now be described with primary reference to the methodology 1200 shown in FIG. 12 with references where appropriate to corresponding elements, processes, and illustrations in FIGS. 8-10. The methodology 1200 begins at block 1202 then moves to block 1204 where the system 800, 800A, 800B accesses an initial or next System Prediction (SP) (e.g., system predictions 1030). The methodology 1200 moves to decision block 1206 to determine whether or not SME feedback on the initial or next SP has been received by the system 800, 800A, 800B. If the answer to the inquiry at decision block 1206 is no, the methodology 1200 moves through Path A to block 1208 and uses result of the analysis performed and information gathered at decision block 1206 (including the analysis performed and information gathered as described below) to block 1208. If the answer to the inquiry at decision block 1206 is no, the methodology 1200 also moves to block 1210 and executes the initial or next SP and records no-SME feedback in the system 800, 800A, 800B (e.g., in the data repository). In some embodiments of the disclosure, decision block 1206 can operate to identify the no-SME-feedback state in any suitable manner. In some embodiments of the disclosure, decision block 1206 can assume no-SME-feedback after not receiving user feedback within a predetermined amount of time. In some embodiments of the disclosure, decision block 1206 can request confirmation of (or agreement with) the no-SME-feedback state from the SME 402 after not receiving user feedback within a predetermined amount of time. In some embodiments of the disclosure, decision block 1206 can be configured to request confirmation of the no-SME-feedback state from the SME 402 after not receiving user feedback within a predetermined amount of time, and can be further configured to not proceed further with the methodology 1200 until the requested confirmation of the no-SME-feedback state is received from the SME 402. In embodiments of the disclosure where confirmation of the no-SME-feedback state is received, the confirmation of the no-SME-feedback state is recorded in the system 800, 800A, 800B (e.g., in the data repository 810, 810A) along with the no-SME-feedback state. In embodiments of the disclosure, the system 800, 800A, 800B is operable to treat the no-SME-feedback state and/or the confirmation of the no-SME-feedback state as the SME's agreement with the initial or next SP. In embodiments of the disclosure, the full functionality of the QA System 1020 (shown in FIG. 10) can be incorporated within decision block 1206 to facilitate the above-described confirmation of the no-SME-feedback state and/or evaluate the sufficiency of the above-described confirmation of the no-SME-feedback state. From block 1210, the methodology moves to decision block 1214.

Returning to decision block 1206, if the answer to the inquiry at decision block 1206 is yes, the methodology 1200 moves or branches in two directions. The methodology 1200 moves to block 1208 and uses the results of the analysis performed and information gathered at decision block 1206 to train/update the relevant cognitive systems of the Digital Ecosystem 820, 820A, 820B, 820C, including the SME-model 402 and/or the SME digital twin 402A; and the methodology 1200 also moves to block 1212 and executes the initial or next SP 1030 with SME feedback, further updates the various System Models of the system 800, 800A, 800B based on SME feedback, and records the SME feedback in the data repository 810, 810A. In embodiments of the disclosure, the full functionality of the QA System 1020 (shown in FIG. 10) can be incorporated within decision block 1206 to facilitate generation of the above-described SME feedback and/or evaluate the sufficiency of the above-described SME feedback. From block 1212, the methodology 1200 moves to decision block 1214.

At decision block 1214, the methodology 1200 evaluates whether or not the accuracy of the SP 1030 is improving (i.e., model drift detection). It is expected that the accuracy of the SPs 1030 will improve over time and be maintained at a higher level than it started based on the additional SME prediction feedback. If this improved performance and sustained improved performance do not occur, it can indicate a malfunction in the portions of the system 800, 800A, 800B that participate in generating SPs 1030 with accuracy that is not improving and being maintained at the higher accuracy level. If the answer to the inquiry at decision block 1214 is no, the methodology 1200 moves to block 1216 and generates an alert. The methodology 1200 then moves to decision block 1218. At decision block 1218, the methodology 1200 evaluates whether or not there are any additional SPs 1030 to be evaluated. If the answer to the inquiry at decision block 1218 is yes, the methodology 1200 moves to block 1220 and ends. If the answer to the inquiry at decision block 1218 is no, the methodology 1200 returns to block 1204 to access and evaluate a next SP 1030 and perform another iteration of the methodology 1200.

FIG. 13A is a simplified block diagram illustrating a system and/or methodology 1300A in accordance with embodiments of the disclosure. FIG. 13A shows a non-limiting example of a framework that represents how a calibrated physics-based model 1306 can be used to complement the PHM AI engine (part of the digital ecosystem 820, 820A) in accordance with aspects of the disclosure, under. this proposed framework, historical sensor/actuator data 1302 is used to generate the statistical information used to calibrate a physics-based dynamic model 1306 of the system or machine under study. This physics-based model 1306 is then modified to inject explicit failures in the form of changes in a component parameter with value equivalent to the failure. For example, a filter's pressure drop can be set to have a value several orders of magnitude higher than its nominal calibrated value. Once the model is injected with these conditions, the model will behave as if the filter is at its end of life and will generate a sensor/actuator signature that is, in most cases, unique to this failure. Moreover, the model is not limited to the set of sensor/actuator parameters available by the collected telemetry. The model can generate additional information; both in the form of additional sensors and signals not available in the telemetry (FIG. 7B) and higher sampling rates of the collected data. This expands the capabilities of the AI because it can now be trained to detect anomalies that are beyond those experienced by the physical machine, which is the source of the limited historic data sets. As the physics model 1306 reaches maturity, the model 1306 will inherently be part of the models generated by the PHM AI engine. Ultimately the physics-based model 1306 will generate a comprehensive library of sensor signatures associated to specific failure modes and component degradation. This library will drive the evolution of the AI models and the engineering development of future machines.

An aspect of a physics-based model is that it does not need to be fully built in order to begin producing value. For example, the model that includes just the hydraulic domain of the system under study, once calibrated, can begin to produce sensor failure signatures that are specific to the hydraulic domain of the machine. Later, the thermal and electromechanical domain can be added as needed to simulate such physical domains and extract the signature of more complex interactions in a multi-domain system.

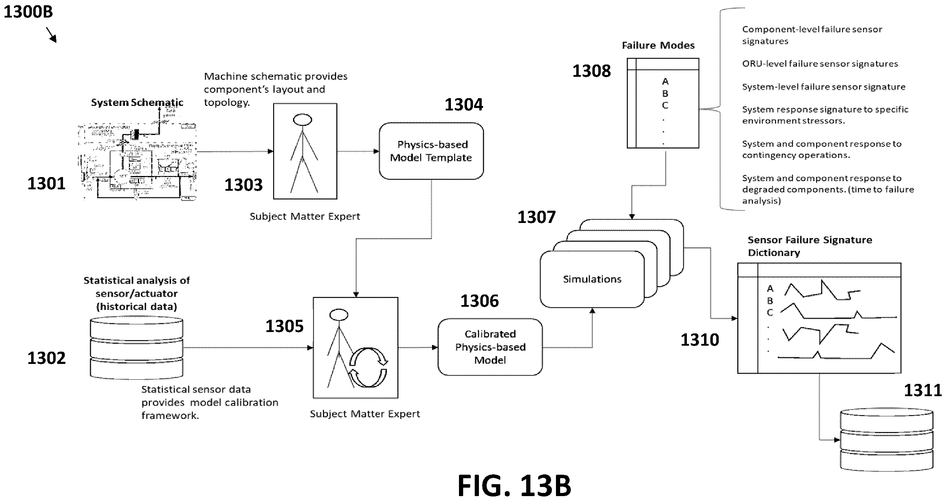

FIG. 13B is a simplified block diagram illustrating a system and/or methodology 1300B in accordance with embodiments of the disclosure. The system/methodology 1300B is a modification of the system/methodology 1300A. In some embodiments of the disclosure, synthetic data can be generated through a Physics-based Model, which is developed and used through process 1300B, depicted in FIG. 13B., though additional means and architectures are possible. Physics-based Models are used to generate synthetic data (i.e., data that did not originate organically/naturally/from non-synthetic data generators, like operable hardware). The need for synthetic data arises from the fact that key events, machine states, etc. that need to be understood may rarely, if ever, occur organically. As such, in order to understand this rare/infrequent/new events and machine states, synthetic data must be created that attempts to replicate what the real/non-synthetic data would look like if such events and machine states occurred (i.e., Sensor Failure Signatures, 1310). The primary purposes and uses of synthetic data can include, but are not limited to, training artificial intelligence models to predict/classify/identify/etc. the rare/infrequent/new events and machine states, performing failure analysis for the sake of quality assurance, building probabilistic risk models, performing diagnostic analysis, understanding hardware intricacies to enhance and improve existing hardware configuration, etc.

Under the system/methodology 1300B, a subject matter expert (SME) 1303 uses system schematics and other engineering documents 1301 to generate a physics-based model template 1304. In some embodiments of the disclosure, a cognitive algorithm model can be trained to uses system schematics and other engineering documents 1301 to generate a physics-based model template 1304. This model template 1304 includes all the components of the system being modelled, e.g., pumps, filters, chemical reactors, etc., but lacks the proper component parameter values that define the dynamic performance of the real machine, i.e., it is not calibrated to behave like the real machine. To obtain a calibrated model, historical telemetry 1302 is used to generate precise statistical information that is then used by an SME 1303 that uses feedback-based algorithms to calibrate a physics-based dynamic model 1306. Once calibrated, model 1306 serves as a digital twin of the actual hardware (i.e., the system dynamics observed in model 1306 match that of the actual hardware).

Once a physics-based dynamic model 1306 has been created, the model 1306 can be used to generate sensor failure signatures, as well as synthetic data sets depicting nominal or off-nominal system behaviors. This can be done by taking model 1306 and copying it many times to create simulations of different events 1307; each simulation is modified to account for a given failure mode or behavior. This modification comes in the form of changes in component parameters with values equivalent to the given failure 1308. For example, a filter's pressure drop can be set to have a value several orders of magnitude higher than its nominal calibrated value. Once the model is injected with these conditions, the model will behave as if the filter is at its end of life and will generate a sensor/actuator signature that is, in most cases, unique to this failure. After many simulations 1307, the generated sensor/actuator signatures can be aggregated into a dictionary of synthetic signals 1310 that correspond to specific failures. This dictionary 1310 can then be used as a point of reference for the Prognostics and Health Monitoring AI Engine to identify anomalies, generate prognostics, and the like.

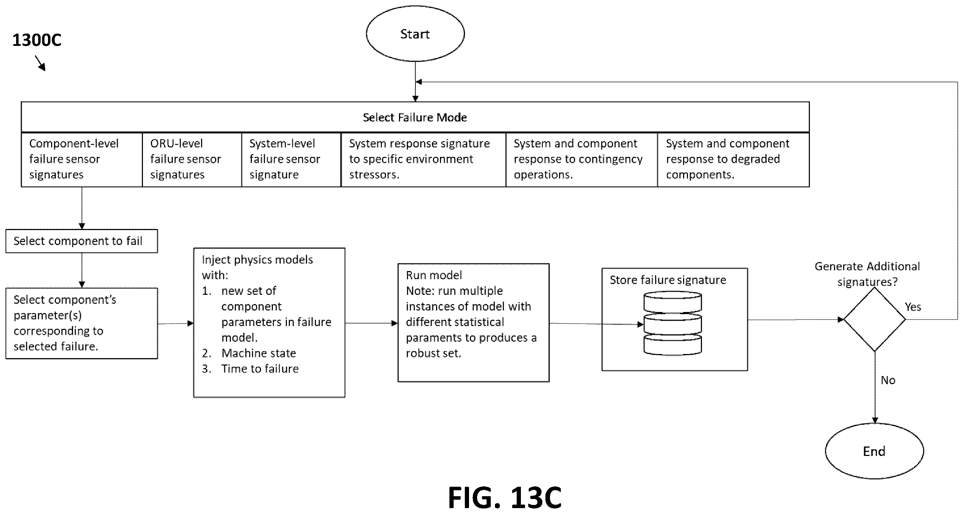

FIG. 13C is a simplified block diagram illustrating a system and/or methodology 1300C in accordance with embodiments of the disclosure. More specifically, FIG. 13C depicts how a physics-based model can be used in accordance with aspects of the disclosure to generate synthetic data, and more specifically signatures of component failure modes. FIG. 13C only presents the operational flow path of generating the signature of a singular component failure using a physics-based model, though the process can be scaled to broader system-level interactions. For instance, signatures can be generated at an orbital replacement unit (ORU) or system level. In the non-limiting example depicted in FIG. 13C, a singular component failure mode is selected for simulation. Once the component has been identified, parameters associated to the performance and failure of that component are selected. The parameters are modified to represent a failed state and the "settings" of those parameters are then injected into the physics-based model. Upon running the model with the modified parameters, the signature of the failure mode in question is generated and stored. If additional signatures are required to simulate the failure mode, then the process is repeated. If not, the results are stored and care used to generate models with the PHM AI engine.

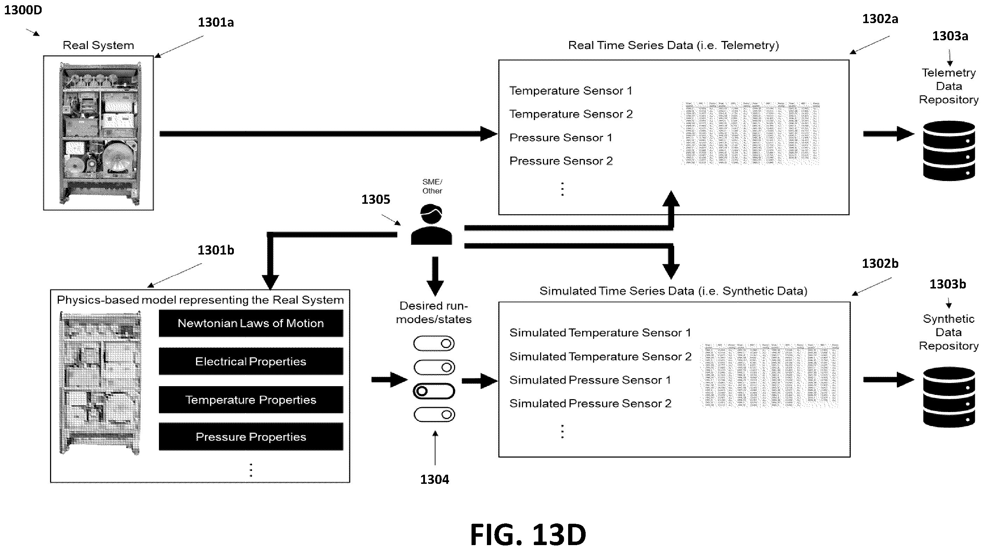

FIG. 13D is a simplified block diagram illustrating a system and/or methodology 1300D in accordance with embodiments of the disclosure. More specifically, FIG. 13D depicts non-limiting example use cases of the Physic-Based model for synthetic data generation in accordance with embodiments of the disclosure. An example of the creation and use of a physics-based dynamic model 1306 can be observed by reviewing the development of such a model 1301b through process 1300D. As depicted, SME 1305 wants to create a physics-based model (1301b) that is representative of the real International Space Station (ISS) Water Processor Assembly (WPA) 1301a. To do this, the SME 1305 uses WPA system schematics and other engineering documents (e.g. software requirements, specifications, etc.) to generate a baseline physics-based model, otherwise referenced as a template 1304. This baseline physics-based model does not behave like the actual WPA 1301a because its modeled components do not have properties equivalent to that of the components in the real system. To identify how the properties need to be modified, the SME reviews the observable system dynamics and behaviors of the WPA 1301a through its collected telemetry 1302a. The SME then modifies the properties (e.g. pressure properties [hydraulic diameter], etc.) of the model template 1304 until the synthetic data set 1302b closely matches that of the actual hardware telemetry 1302a. Once this behavior has been achieved, a physics-based model 1301b representative of the WPA has been created.

The physics-based model 1301b of the WPA can then be used to study physical phenomena that may otherwise be difficult to observe. The SME can use the model 1301b to simulate an undesirable run state 1304 by further modifying the properties of 1301b. For example, if the SME 1305 wanted to evaluate what would happen if a filter clogged in the WPA 1301a, the SME 1305 could modify the hydraulic diameter properties of the filter in model 1301b. Once the properties are modified to represent the desired running condition 1304, the model is run as a simulation 1307. The simulation 1307 produces a synthetic data set 1302b that is indicative of what would happen if the filter in 1301a clogged. This synthetic data set 1302b would then serve as a failure signature indicating a clogged filter in 1301a, and would be stored for reference in the Sensor Failure Signature Dictionary 1310 within the Synthetic Data Repository 1303b. The failure signature of the clogging filter could then be used to train the PHM AIEngine in system 800, 800A, 800B to recognize when the filter in the WPA 1301a is clogged, or predict how long until it clogs, etc. by comparing the failure signature to the real WPA 1301a system telemetry 1302a.

In some embodiments of the disclosure, the AI Engine Process 1400A depicted in FIG. 14A can be implemented in the manner presented in the Figure, though additional means and architectures are possible. In the AI Engine Process 1400A, consumers 1401 ingest information from either the PHM AI Engine meta model 1406 or flight hardware 1407. Upon receiving this information, the consumers 1401 can either consume the information terminally, that is, and not flow further information back to through 1400A or they can interact/pass through further data through the system.

In the event that the consumer wishes/is commanded to flow information back through 1400A, there are two possible channels through which the data can be sent. First, the data can be sent back as normal telemetry 1402, that is, with the intent for the data to be migrated back to the telemetry and data repository 1404 for storage purposes, but no immediate action. Second, data can be sent back as triggered event telemetry 1403, that is, with the intent for the data to be migrated back to the telemetry and data repository 1404 with the desire for immediate action to be taken. In the event that the data flowed through 1400A is sent through triggered event channel 1403, the PHM AI Engine metamodel 1406 will use that trigger and new data to automatically begin some set of task events (updating/retraining existing models, entirely rebuilding existing models, performing model prediction drift detection, etc.).

Additionally, a triggered event 1403 can also be used to pass information through the telemetry and event data repository 1404 to the physics-based modelling engine 1405, where the new data can automatically be used to further update/tune/modify/calibrate/validate the modelling engine. Normal telemetry 1402 can also be ingested into the physics-based modelling engine 1405, though because it was not sent through as a triggered event 1403, such data would be manually migrated and processed into the physics-based modelling engine 1405. The synthetic data generated by the physics-based modelling engine 1405 would then also feed into the PHM AI Engine metamodel 1406 to be used for self-learning.

As an example of FIG. 14A in practice, let the flight hardware 1407 represent the International Space Station's ECLSS water processor assembly (WPA). If consumer 1401 is an astronaut who just changed a filter inside the WPA, they can send information regarding the filter change through channel 1403 as a triggered event. The information about the filter change would then be stored inside the telemetry and data event repository 1404, and subsequently, a set of events can automatically begin. The new information received about the filter change can cause the PHM AI Engine metamodel 1406 to validate its predicted schedule when that filter was predicted to be changed against the actual change date. Additionally, the new information can be ingested in the various models related to the WPA through an automated retraining event, or if the metamodel deems it necessary, entirely new models and data preprocessing can be created. Additionally, the triggered event 1403 can also cause data to flow through the telemetry and event data repository 1404 through to the physics-based modelling engine 1405, where the conditions surrounding the filter change can be used to automatically validate or calibrate/tune the physics-based models of the filter and surrounding systems to ensure that the physics-based models are accurately reflecting real flight hardware performance.

FIG. 14B is a simplified block diagram illustrating a system and/or methodology 1400B in accordance with embodiments of the disclosure. In some embodiments of the disclosure, the concurrent synthetic sensor (CSS) data generation process 1400B depicted in FIG. 14B can be implemented in the manner presented in the Figure, though additional means and architectures are possible. A CSS is defined as a calculation of values of some measurement on hardware that does not have an explicit sensor (i.e., sensor is actually embedded within the hardware) and therefore must be inferred. The "sensor" element of CSS refers to the fact that the CSS functions exactly as any explicit sensor in terms of being a means to capture real-time measurements. The "synthetic" element of CSS refers to the fact that, because no explicit sensor exists for the measurement that the CSS calculates, the data generated by the CSS is technically synthetic. The "concurrent" element of CSS refers to the fact that for each time-stamped point of data captured by the explicit sensors, there exists a concurrent synthetic measurement.

The intent and purpose of the CSS data generation process is to infer the value of key system measures that are not explicitly measured or collected by the suite of sensors embedded on the hardware. The use cases for CSS data are, but not limited to: 1) to be able to enhance the real/non-synthetic data telemetry collected from the hardware to provide additional and potentially powerful measures to be used in all downstream PHM AI Engine models and/or performance analysis 2) to determine which sensors are essential to embed on hardware such that the number of sensors required are minimized (to reduce cost and engineering complexity) while simultaneously maximizing the total number of measures/features that can be captured for analytic purposes 3) to troubleshoot system issues that can be caused by latent measurements not directly observed in the telemetry. Use case 3 is explored in more detail in FIG. 14C.

In some embodiments of the disclosure, the CSS data generation process includes hardware 1411 that contains explicit sensors 1412 that measure various performance metrics (e.g., temperature, pressure, conductivity, etc.) and send those values back via telemetry to the telemetry and event data repository 1413. Due to cost constraints, engineering complexity, or physical impossibility, there are various measures that may or may not have an explicit sensor 1412 on the hardware. Consequently, potentially critical information may not exist in the telemetry and event data repository 1413. For example, a fluid pump may have explicit sensors 1412 that measures the speed and temperature of the fluid at the point of exit, but not a sensor measuring the pressure. Consequently, the pressure at this point in the system could be viewed as a latent measurement that could be represented by a CSS. In order to accurately generate a CSS for the pressure value on the system, the measurements from the explicit sensors can be passed through a physics-based modelling engine 1414 (described in further detail in FIG. 8A) in order to generate the expected value (by means of known physics relationships and some modelling adjustments) of the pressure, thereby generating a CSS (i.e. inferred sensor) 1415 value. This inferred value is then passed through to the synthetic data repository 1416 bearing a time-stamp such that it can be linked 1417 with the telemetry and event data repository 1413.

To prevent confusion as to why the complexity of model 1414 is required as opposed to utilizing direct physics equations: physics-based equations are exact only if all components in the system are perfect; however, due to manufacturing, installation and assembly, and operating imperfections and deformities, the standard physics equations may not be accurate representations, and therefore straight calculations from explicit sensors to inferred sensors may not be accurate. For example, a pipe that is originally designed to be perfectly circular can incur damage upon installation, and thus the installed pipe actually contains a crimp or dent in its structure. Physics modelling operating without benefit of the embodiments of the disclosure defined herein are not be able to generate outputs corresponding to the damaged pipe. The functionality required to address this situation can be provided through the model 1414 in accordance with embodiments of the disclosure.

As an example of FIG. 14B in practice, let the hardware 1411 represent the International Space Station's ECLSS water processor assembly (WPA). Imagine that, in reference to FIG. 14B, that explicit sensor 1412 'a' is the speed of a liquid at the outflow of a fluid pump, explicit sensor 1412 'b' is the temperature of the liquid a the outflow of a fluid pump, non-existent sensor 'c' would measure the pressure at the outflow (if it existed) of a fluid pump, and explicit sensor 1412 'd' measures the viscosity of the fluid at the outflow of a fluid pump. In order to estimate the value of the pressure at the outflow, the explicit values at every measurement in time of sensors 1412 'a', 'b', and 'd' would be passed through physics-based modelling engine 1414 that had been trained (and specifically calibrated on the ISS WPA data) such that the model 1414 could generate CSS data 1415 for 'c'. As the values of explicit sensors 'a,' `b,' and 'd' were passed and stored in the telemetry and event data repository 1413, the CSS data 1415 values derived from model 1414 would be time-stamped and sent to the synthetic data repository 1416. When the data was extracted for use later to train a prognostic failure model on the fluid pump, the time-stamp linkage 1417 between the synthetic data repository 1416 and the telemetry and event data repository 1413 would allow both the explicit sensor data 1412 and the CSS data 1415 to be merged together to enhance the training data for the model, thus potentially increasing the predictive power of the prognostic model.

A further example application of the process depicted in FIG. 14B, applied in the context of use case 3 (i.e. to troubleshoot system issues that may be caused by latent measurements not directly observed in the telemetry), can be described through FIG 14C. Imagine that telemetry of a spaceborne product, for example the ISS WPA, captures and delivers performance telemetry to Mission Control and Earth-based SMEs at a sampling frequency of 0.1 Hz (i.e., one (1) data point every ten (10) seconds). This sampling rate may be sufficient during periods of nominal performance, but some dynamic behaviors may not be observable at this sampling rate. For instance, if a pump inside the WPA is wearing out, the rate at which it accelerates to operating speed, or decelerates during a shutdown, can be indicative of pump health. In the event that the pump accelerates to operational speed or decelerates during a shutdown in a period of time less than 10 seconds, the acceleration or deceleration behavior will not be observable in the data. By passing the captured telemetry through the Physics-Based Modelling Engine, a high-resolution synthetically-supplemented data set can be generated (i.e. synthetic data points can fill in gaps in the data). This new data set can then be used to explore the acceleration or deceleration behavior of the pump, allowing the health of the pump to be explored and inferred for prognostics or troubleshooting purposes.

FIG. 15A is a simplified block diagram illustrating a system and/or methodology 1500A in accordance with embodiments of the disclosure. In some embodiments of the disclosure, the synthetic data generation process 1500A depicted in FIG. 15A can be implemented in the manner presented in the Figure, though additional means and architectures are possible. The intent and purpose of the synthetic data generation process is to create synthetic data (i.e. data that did not originate organically/naturally/from non-synthetic data generators). The need for synthetic data arises from the fact that key events, machine states, etc. that need to be understood may rarely, if ever, occur organically. As such, in order to understand this rare/infrequent/new events and machine states, synthetic data must be created that attempts to replicate what the real/non-synthetic data would look like if such events and machine states occurred. The primary purposes and uses of synthetic data can include, but are not limited to, training artificial intelligence models to predict/classify/identify/etc. the rare/infrequent/new events and machine states, performing failure analysis for the sake of quality assurance, building probabilistic risk models, performing diagnostic analysis, understanding hardware intricacies to enhance and improve existing hardware configuration, etc.

In some embodiments of the disclosure, the synthetic data generation process consists of source data 1501, which originates real/non-synthetic data. The source data 1501 can include, but is not limited to, hardware, subject matter experts, users of the disclosure or hardware, etc. The real/non-synthetic data is then captured through various means into the telemetry and event data repository 1502, part of the data repository of system 800. This real/non-synthetic data can then be utilized in two separate means to create synthetic data. First, non-physics-based models 1508 (e.g. generative adversarial networks, autoencoders, etc.), that is models with no explicit programming related to the physics of the hardware, can be trained on this data. Once these models have been trained and can accurately emulate the nominal performance of the organic data, rare/infrequent/new events and machine states can be faked by using input parameter values that would coincide with the desired event/machine state. The outputs of models 1508 would consist of synthetically generated data that would theoretically reflect the performance behavior of the underlying hardware. The output of 1508 would then be captured as a part of the synthetic data repository 1509, part of the data repository of system 800, to be later used in the PHM AI Engine Process described later in FIG. 15B.

The second means by which synthetic data may be generated is through the use of a Physics-based Modelling Engine 1507. The Physics-based Modelling Engine 1507 consists of two components. The first component is the auto-calibrating physics-based model 1505. Model 1505 is itself composed of two parts: a physics-based model 1505a (described earlier herein) and a calibration model 1505b. The physics-based model 1505a is a dynamic model that leverages the known physics and assembly of the hardware to mathematically represent the performance of the hardware. The physics-based model 1505a is ultimately a theoretical model that aims to digitally reconstruct the performance of the hardware based on its physics, effectively serving as a hardware digital twin, as described previously herein. This model, however, may not perfectly reflect the actual performance of the in-service hardware due to slight variations or modifications to the hardware itself, unknown installation and assembly disparities, etc. Consequently, a calibration model 1505b is used in conjunction with the physics-based model 1505a in order to tune the physics-based model to accurately mirror the true hardware performance. This calibration model 1505b can consist of a variety of methods, for example, traditional methods of calibration from the signal processing field, gradient descent optimization, or reinforcement-learning artificial intelligence designed to optimize resultant distributions, correlations, autocorrelations, etc.

The secondary component of the Physics-based Modelling Engine 1507 is the error-adjustment model 1506. Even after being optimized and calibrated, the data generated by the auto-calibrating physics-based model 1505 may still not perfectly emulate the true machine. Therefore, a second set of models (statistical or artificial intelligence), may be, but does not have to be, utilized to correct the outputs of model 1505. The error-adjustment model 1506, through a process of supervised machine learning or other predictive models, can learn to predict the error between model 1505's synthetic-data outputs and the real/non-synthetic data. As such, the synthetic data created by model 1505 may be passed through model 1506 to generate the final state of synthetic data that is ultimately sent to the synthetic data repository 1509, part of the data repository of system 800. Once all elements inside of the Physics-based Modelling Engine 1507 are trained and calibrated, the desired rare/infrequent/new events and machine state can be initiated to ultimately generate synthetic data reflecting what data would look like under the conditions of the input state/event/condition.

As an additional feature to the synthetic data generation process 1500A is its automatic self-calibrating nature. The need for self-calibration is to a) remove the need for SME interaction, which is often delayed and/or slow b) to ensure that the data supporting the PHM AI Engine is as accurate to the current hardware performance as possible (ex: for life support systems, the risk of prognostic failure prediction models trained on stale data that no longer reflects the current hardware performance could have extreme consequences). There are two types of calibration events. First, scheduled calibration and training 1503 can occur. Such calibration would occur on a set schedule, ingesting the latest real/non-synthetic data accumulated and subsequently a) validating that Physics-based Modelling Engine 1507 was still within some allowed tolerance of the observed real/non-synthetic data b) retraining and updating model 1508. Second, event triggered calibration and training 1504 can occur. Certain events, such as the occurrence of a known important event, can cause the calibration validation cycle and retraining cycle to automatically initiate out of schedule. Again, once the calibration cycle was initialized, a) Physics-based Modelling Engine 1507 would be validated against the observed data to ensure that it was still within some allowed tolerance of the observed real/non-synthetic data b) model 1508 would be retrained. In the event that drift between Physics-based Modelling Engine 1507 and the observed real/non-synthetic data occurred, both models 1505b and 1506 would then automatically retrain and reoptimize themselves in order to bring the Physics-based Modelling Engine 1507 back into alignment with the performance of the real hardware.

As an example of FIG. 15A in practice, let the source data 1501 represent the International Space Station's ECLSS water processor assembly (WPA). Imagine that models 1507 and 1508 are already in existence and optimized. If NASA decides to increase the constant flow rate of water through the WPA well after models 1507 and 1508 have been trained, one would expect the flight hardware to begin to deviate from the modelled performance as higher flow rate may cause physical components inside the WPA to degenerate and deform in ways not captured by models 1507 and 1508. Consequently, after a scheduled 1503 or triggered 1504 calibration and training cycle, the latest real WPA data would be extracted from the telemetry and event data repository 1502. The non-physics-based model 1508 would then retrain on this newer data such that it would learn the latest deviations in the WPA hardware such that it could emulate its performance. Additionally, the Physics-based Modelling Engine 1507 validation cycle would conclude that Physics-based Modelling Engine 1507 is no longer within accepted tolerance of the observed/non-synthetic data, and it would automatically retrain the calibration model 1505b and the error-adjustment model 1506 in order to bring Physics-based Modelling Engine 1507 back into alignment with the observed/non-synthetic data such that it remains a viable digital twin. Once 1507 had been brought back into alignment with the real WPA data and models 1508 had been retrained, then the host of rare/infrequent/new events and machine states that are of interest, such as the failure of critical pump 'X', could be simulated through the models 1507 and 1508 in order to understand what the data would look like under the new operating conditions of higher constant flow rate. Subsequently, this synthetic data could be fed into the PHM AI Engine in order to (re)train the models in the engine to be able to predict in advance whether critical pump 'X' will fail well before it happens to give the astronauts advanced warning such that they could take action to protect and preserve their lives.

FIG. 15B is a simplified block diagram illustrating a system and/or methodology 1500B in accordance with embodiments of the disclosure. In some embodiments of the disclosure, the AI Engine Process depicted in FIG. 15B can be implemented in the manner presented in the Figure, though additional means and architectures are possible. In some embodiments of the art, the PHM AI Engine is defined as a suite of models created, modified, optimized, etc. by a larger model (the metamodel). The PHM AI Engine is a multilayer system in which the metamodel creates/interacts with various AIML and other statistical models that are then deployable for use in the digital ecosystem. The metamodel itself is not directly used or consumed in the digital ecosystem, but rather creates/trains/optimizes/etc. the models that can be and are directly consumed in the digital ecosystem. In the AI Engine Process 1500B, consumers 1511 ingest information from either the PHM AI Engine metamodel 1516 or flight hardware 1517. Upon receiving this information, the consumers 1511 can either consume the information terminally, that is, and not flow further information back to through 1500B or they can interact/pass through further data through the system.

In the event that the consumer wishes/is commanded to flow information back through 1500B, there are two possible channels through which the data can be sent. First, the data can be sent back as normal telemetry 1512, that is, with the intent for the data to be migrated back to the telemetry and data repository 1514 for storage purposes, but no immediate action. Second, data can be sent back as triggered event telemetry 1513, that is, with the intent for the data to be migrated back to the telemetry and data repository 1514 with the desire for immediate action to be taken. In the event that the data flowed through 1500B is sent through triggered event channel 1513, the PHM AI Engine metamodel 1516 will use that trigger and new data to automatically begin some set of task events (updating/retraining existing models, entirely rebuilding existing models, performing model prediction drift detection, etc.).

Additionally, a triggered event 1513 may also be used to pass information through the telemetry and event data repository 1514 to the physics-based modelling engine 1515, where the new data may automatically be used to further update/tune/modify/calibrate/validate the modelling engine. Normal telemetry 1512 may also be ingested into the physics-based modelling engine 1515, though because it was not sent through as a triggered event 1513, such data would be manually migrated and processed into the physics-based modelling engine 1515 via scheduled events. The synthetic data generated by the physics-based modelling engine 1515 would then also feed (through the intermediary of the synthetic data repository 1515a) into the PHM AI Engine metamodel 1516 to be used for self-learning.

As an example of FIG. 15B in practice, let the flight hardware 1517 represent the International Space Station's ECLSS water processor assembly (WPA). If consumer 1511 is an astronaut who just changed a filter inside the WPA, they may send information regarding the filter change through channel 1513 as a triggered event. The information about the filter change would then be stored inside the telemetry and data event repository 1514, and subsequently, a set of events may automatically begin.

The new information received about the filter change may cause the PHM AI Engine metamodel 1516 to validate its predicted schedule when that filter was predicted to be changed against the actual change date. Additionally, the new information may be ingested in the various models related to the WPA through an automated retraining event, or if the metamodel deems it necessary, entirely new models and data preprocessing may be created. Additionally, the triggered event 1513 may also cause data to flow through the telemetry and event data repository 1514 through to the physics-based modelling engine 1515, where the conditions surrounding the filter change may be used to automatically validate or calibrate/tune the physics-based models of the filter and surrounding systems to ensure that the physics-based models are accurately reflecting real flight hardware performance.

Thus, it can be seen from the foregoing detailed description that embodiment of the disclosure provide technical effects. For example, the functions implemented by the system 800, 800A enable current staff and SMEs to support a growing number of products and platforms. The system 800, 800A empowers newer workforce with access to digitized SME contextual knowledge at their fingertips using the SME-model and/or the SME digital twin, thereby minimizing the training and learning curve (time-to-expert) and allowing them to provide confident product support. SME knowledge is retained in algorithms and contextual information within the intelligent system 800, 800A, which means that SME experience and knowledge are not lost to attrition. The system 800, 800A enables simplified controller solutions, allowing commercial ECLSS products to be controlled and monitored from the ground, lowering the cost of the controllers, and enabling price-to-win targets.

The architecture of the system 800, 800A can equip existing products with intelligent product functions, such as prognostics and health management capabilities, without retrofit. The ability of the system 800, 800A to evaluate real-time data contributes to identifying problems faster. The model-enhancement features of the system 800, 800A (e.g., through the QA system, the SME-model, the SME digital twin, etc.) provide enhanced models accuracy, foresight, and granular oversight.

Additional details of machine learning techniques that can be used to aspects of the disclosure disclosed herein will now be provided. The various types of computer control functionality of the processors described herein can be implemented using machine learning, deep learning, and/or natural language processing techniques. In general, deep learning techniques can be run on so-called "neural networks," which can be implemented as programmable computers configured to run sets of specialized algorithms. Neural networks are data agnostic and can be applied in a variety of disciplines, including neurophysiology, cognitive science/psychology, physics (statistical mechanics), control theory, computer science, artificial intelligence, statistics/mathematics, pattern recognition, computer vision, parallel processing and hardware (e.g., digital/analog/VLSI/optical).

The basic function of neural networks and their machine learning algorithms is to recognize patterns by interpreting structured data through a kind of machine perception. Unstructured real-world data in its native form (e.g., images, sound, text, or time series data) is converted to a structured numerical form (e.g., a vector having magnitude and direction) that can be understood and manipulated by a computer. The machine learning algorithm performs multiple iterations of learning-based analysis on the real-world data vectors until patterns (or relationships) contained in the real-world data vectors are uncovered and learned. The learned patterns/relationships function as predictive models that can be used to perform a variety of tasks, including, for example, classification (or labeling) of real-world data and clustering of real-world data. Classification tasks often depend on the use of labeled datasets to train the neural network (i.e., the model) to recognize the correlation between labels and data. This is known as supervised learning. Examples of classification tasks include detecting people/faces in images, recognizing facial expressions (e.g., angry, joyful, etc.) in an image, identifying objects in images (e.g., stop signs, pedestrians, lane markers, etc.), recognizing gestures in video, detecting voices, detecting voices in audio, identifying particular speakers, transcribing speech into text, and the like. Clustering tasks identify similarities between objects, which it groups according to those characteristics in common and which differentiate them from other groups of objects. These groups are known as "clusters."

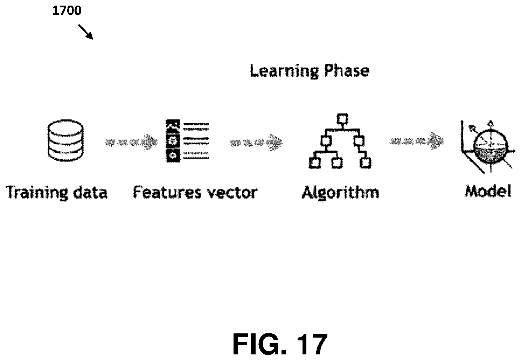

An example of machine learning techniques that can be used to implement aspects of the disclosure will be described with reference to FIGS. 16 and 17. Machine learning models configured and arranged according to embodiments of the disclosure will be described with reference to FIG. 16. Detailed descriptions of an example computing system and network architecture capable of implementing one or more of the embodiments of the disclosure described herein will be provided with reference to FIG. 18.

FIG. 16 depicts a block diagram showing a machine learning system 1600 capable of implementing various aspects of the disclosure described herein (e.g. regression, classification, anomaly detection, clustering, autonomous decision making, etc.). More specifically, the functionality of the system 1600 is used in embodiments of the disclosure to generate various models and sub-models that can be used to implement computer functionality in embodiments of the disclosure. The system 1600 includes multiple data sources 1602 in communication through a network 1604 with an AI algorithm 1610. In some aspects of the disclosure, the data sources 1602 can bypass the network 1604 and feed directly into the AI algorithm 1610. The data sources 1602 provide data/information inputs that will be used by the AI algorithm 1610 in accordance with embodiments of the disclosure. The data sources 1602 also provide data/information inputs that can be used by the AI algorithm 1610 to train and/or update model(s) 1616 created by the AI algorithm 1610. The data sources 1602 can be implemented as a wide variety of data sources, including but not limited to, sensors configured to gather real time data, data repositories (including training data repositories), and outputs from other AI algorithms. The network 1604 can be any type of communications network, including but not limited to local networks, wide area networks, private networks, the Internet, and the like.

The AI algorithm 1610 can be implemented as algorithms executed by a programmable computer such as a processing system 1800 (shown in FIG. 18). As shown in FIG. 16, the AI algorithm 1610 includes a suite of machine learning (ML) algorithms (inclusive of classical statistical learning models, deep learning models, reinforcement learning models, and any combination thereof) 1612; natural language processing (NLP) algorithms 1614; and other types of model(s) 1616 that are relationship (or prediction) algorithms generated (or learned) by the ML algorithms 1612. The algorithms 1612, 1614, 1616 of the AI algorithm 1610 are depicted separately for ease of illustration and explanation. In embodiments of the disclosure, the functions performed by the various algorithms 1612, 1614, 1616 of the AI algorithm 1610 can be distributed differently than shown. For example, where the AI algorithm 1610 is configured to perform an overall task having sub-tasks, the suite of ML algorithms 1612 can be segmented such that a portion of the ML algorithms 1612 executes each sub-task and a portion of the ML algorithms 1612 executes the overall task. Additionally, in some embodiments of the disclosure, the NLP algorithms 1614 can be integrated within the ML algorithms 1612.

The NLP algorithms 1614 include speech recognition functionality that allows the AI algorithm 1610, and more specifically the ML algorithms 1612, to receive natural language data (text and audio) and apply elements of language processing, information retrieval, and machine learning to derive meaning from the natural language inputs and potentially take action based on the derived meaning. The NLP algorithms 1614 used in accordance with aspects of the disclosure can also include speech synthesis functionality that allows the AI algorithm 1610 to translate the result(s) 1620 into natural language (text and audio) to communicate aspects of the result(s) 1620 as natural language communications.

The NLP and ML algorithms 1614, 1612 receive and evaluate input data (i.e., training data and data-under-analysis) from the data sources 1602. The ML algorithms 1612 includes functionality that is necessary to interpret and utilize the input data's format. For example, where the data sources 1602 include image data, the ML algorithms 1612 can include visual recognition software configured to interpret image data. The ML algorithms 1612 apply machine learning techniques to received training data (e.g., data received from one or more of the data sources 1602) in order to, over time, create/train/update one or more models 1616 that model the overall task and the sub-tasks that the AI algorithm 1610 is designed to complete.

Referring now to FIGS. 16 and 17 collectively, FIG. 17 depicts an example of a learning phase 1700 performed by the ML algorithms 1612 to generate the above-described models 1616. In the learning phase 1700, the AI algorithm 1610 extracts features from the training data and coverts the features to vector representations that can be recognized and analyzed by the ML algorithms 1612. The features vectors are analyzed by the ML algorithm 1612 to uncover relationships between and among the training data. Examples of suitable implementations of the ML algorithms 1612 include but are not limited to linear/polynomial/ridge/lasso/elastic-net regression, logit regression, k-nearest neighbors, decision trees, random forests, gradient boosted forests, naive bayes classifiers, support vector machines/regressors, neural networks (traditional artificial neural networks, recurrent neural networks, convolutional neural networks, generative adversarial networks, etc.), Q-learning, policy gradient models, k-means, DBSCAN clustering, hidden Markov models, and the like. The learning or training performed by the ML algorithms 1612 can be generative, supervised, unsupervised, a hybrid that includes aspects of supervised and unsupervised learning (semi-supervised), or reinforcement models..

When the models 1616 are sufficiently trained by the ML algorithms 1612, the data sources 1602 that generate "real world" data as well as the data sources 1602 that generate synthetic data are accessed, and the data is applied to the models 1616 to generate usable versions of the results 1620. In some embodiments of the disclosure, the results 1620 can be fed back to the AI algorithm 1610 and used by the ML algorithms 1612 as additional training data for updating and/or refining the models 1616.

In aspects of the disclosure, the ML algorithms 1612 and the models 1616 can be configured to apply confidence levels (CLs) to various ones of their results/determinations (including the results 1620) in order to improve the overall accuracy of the particular result/determination. When the ML algorithms 1612 and/or the models 1616 make a determination or generate a result for which the value of CL is below a predetermined threshold (TH) (i.e., CL < TH), the result/determination can be classified as having sufficiently low "confidence" to justify a conclusion that the determination/result is not valid, and this conclusion can be used to determine when, how, and/or if the determinations/results are handled in downstream processing. If CL > TH, the determination/result can be considered valid, and this conclusion can be used to determine when, how, and/or if the determinations/results are handled in downstream processing. Many different predetermined TH levels can be provided. The determinations/results with CL>TH can be ranked from the highest CL>TH to the lowest CL>TH in order to prioritize when, how, and/or if the determinations/results are handled in downstream processing.

In aspects of the disclosure, the AI algorithm 1610 can be configured to apply confidence levels (CLs) to the results 1620. When the AI algorithm 1610 determines that a CL in the results 1620 is below a predetermined threshold (TH) (i.e., CL < TH), the results 1620 can be classified as sufficiently low to justify a classification of "no confidence" in the results 1620. If CL > TH, the results 1620 can be classified as sufficiently high to justify a determination that the results 1620 are valid. Many different predetermined TH levels can be provided such that the results 1620 with CL>TH can be ranked from the highest CL>TH to the lowest CL>TH.

The functions performed by the AI algorithm 1610, and more specifically by a neural network, one possible representation of which is the ML algorithm 1612, can be organized as a weighted directed graph, wherein the nodes are artificial neurons (e.g. modeled after neurons of the human brain), and wherein weighted directed edges connect the nodes. The directed graph of the AI algorithm 1610 can be organized such that certain nodes form input layer nodes, certain nodes form hidden layer nodes, and certain nodes form output layer nodes. The input layer nodes couple to the hidden layer nodes, which couple to the output layer nodes. Each node is connected to every node in the adjacent layer by connection pathways, which can be depicted as directional arrows that each has a connection strength. Multiple input layers, multiple hidden layers, and multiple output layers can be provided. When multiple hidden layers are provided, the AI algorithm 1610 can perform deep-learning for executing the assigned task(s) of the AI algorithm 1610.

Similar to the functionality of a human brain, each input layer node receives inputs with no connection strength adjustments and no node summations. Each hidden layer node receives its inputs from all input layer nodes according to the connection strengths associated with the relevant connection pathways. A similar connection strength multiplication and node summation is performed for the hidden layer nodes and the output layer nodes.

One common form of neural network processes data records (e.g., outputs from the data sources 1602) one at a time, and it "learns" by comparing an initially arbitrary classification of the record with the known actual classification of the record. Using a training methodology knows as "back-propagation" (i.e., "backward propagation of errors"), the errors from the initial classification of the first record are fed back into the weighted directed graphs of the AI algorithm 1610 and used to modify the weighted directed graph's weighted connections the second time around, and this feedback process continues for many iterations. In the training phase of a weighted directed graph of the AI algorithm 1610 for a supervised learning problem, the correct classification for each record is known, and the output nodes can therefore be assigned "correct" values. For example, a node value of "1" (or 0.9) for the node corresponding to the correct class, and a node value of "0" (or 0.1) for the others. It is thus possible to compare the weighted directed graph's calculated values for the output nodes to these "correct" values, and to calculate an error term for each node (i.e., the "delta" rule). These error terms are then used to adjust the weights in the hidden layers so that in the next iteration the output values will be closer to the "correct" values.

FIG. 18 depicts a high level block diagram of the computer system 1800, which can be used to implement one or more computer processing operations in accordance with aspects of the present disclosure. Although one exemplary computer system 1800 is shown, computer system 1800 includes a communication path 1825, which connects computer system 1800 to additional systems (not depicted) and can include one or more wide area networks (WANs) and/or local area networks (LANs) such as the Internet, intranet(s), and/or wireless communication network(s). Computer system 1800 and the additional systems are in communication via communication path 1825, e.g., to communicate data between them.

Computer system 1800 includes one or more processors, such as processor 1802. Processor 1802 is connected to a communication infrastructure 1804 (e.g., a communications bus, cross-over bar, or network). Computer system 1800 can include a display interface 1806 that forwards graphics, text, and other data from communication infrastructure 1804 (or from a frame buffer not shown) for display on a display unit 1808. Computer system 1800 also includes a main memory 1810, preferably random access memory (RAM), and can also include a secondary memory 1812. Secondary memory 1812 can include, for example, a hard disk drive 1814 and/or a removable storage drive 1816, representing, for example, a floppy disk drive, a magnetic tape drive, or an optical disk drive. Removable storage drive 1816 reads from and/or writes to a removable storage unit 1818 in a manner well known to those having ordinary skill in the art. Removable storage unit 1818 represents, for example, a floppy disk, a compact disc, a magnetic tape, or an optical disk, flash drive, solid state memory, etc. which is read by and written to by removable storage drive 1816. As will be appreciated, removable storage unit 1818 includes a computer readable medium having stored therein computer software and/or data.

In alternative embodiments of the disclosure, secondary memory 1812 can include other similar means for allowing computer programs or other instructions to be loaded into the computer system. Such means can include, for example, a removable storage unit 1820 and an interface 1822. Examples of such means can include a program package and package interface (such as that found in video game devices), a removable memory chip (such as an EPROM, or PROM) and associated socket, and other removable storage units 1820 and interfaces 1822 which allow software and data to be transferred from the removable storage unit 1820 to computer system 1800.

Computer system 1800 can also include a communications interface 1824. Communications interface 1824 allows software and data to be transferred between the computer system and external devices. Examples of communications interface 1824 can include a modem, a network interface (such as an Ethernet card), a communications port, or a PCM-CIA slot and card, etcetera. Software and data transferred via communications interface 1824 are in the form of signals which can be, for example, electronic, electromagnetic, optical, or other signals capable of being received by communications interface 1824. These signals are provided to communications interface 1824 via communication path (i.e., channel) 1825. Communication path 1825 carries signals and can be implemented using wire or cable, fiber optics, a phone line, a cellular phone link, an RF link, and/or other communications channels.

A cloud computing system 50 is in wired or wireless electronic communication with the computer system 1800. The cloud computing system 50 can supplement, support or replace some or all of the functionality (in any combination) of the computing system 1800. Additionally, some or all of the functionality of the computer system 1800 can be implemented as a node of the cloud computing system 50.

Many of the functional units of the systems described in this specification have been labeled as modules. Embodiments of the disclosure apply to a wide variety of module implementations. For example, a module can be implemented as a hardware circuit including custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like. Modules can also be implemented in software for execution by various types of processors. An identified module of executable code can, for instance, include one or more physical or logical blocks of computer instructions which can, for instance, be organized as an object, procedure, or function. Nevertheless, the executables of an identified module need not be physically located together, but can include disparate instructions stored in different locations which, when joined logically together, function as the module and achieve the stated purpose for the module.

The various components/modules/models of the systems illustrated herein are depicted separately for ease of illustration and explanation. In embodiments of the disclosure, the functions performed by the various components/modules/models can be distributed differently than shown without departing from the scope of the various embodiments of the disclosure describe herein unless it is specifically stated otherwise.

Aspects of the disclosure can be embodied as a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The terms "about," "substantially," and equivalents thereof are intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A deep-mission system comprising a processor system electronically connected to a memory (1810), wherein the processor system performs processor system operations comprising:
executing a first instance of a cognitive algorithm;
generating data of the deep-mission system that can be used to fine-tune the first instance of the cognitive algorithm;
transmitting the data of the deep-mission system over a deep-mission communication path to a remote station (850);
wherein the remote station (850) is operable to:
based at least in part on the data of the deep-mission system, perform fine-tuning operations on a second instance of the cognitive algorithm located at the remote station (850);
generate updates to the cognitive algorithm based on the fine-tuning operations; and
transmit the updates to the cognitive algorithm over the deep-mission communication path to the deep-mission system; and
using the updates to the cognitive algorithm to update the first instance of the cognitive algorithm.

2. The deep-mission system of claim 1, wherein the deep-mission system comprises a deep-space system.

3. The deep-mission system of claim 2, wherein the remote station (850) is selected from the group consisting of an earth-based computational hub and a near-earth station of an earth-based computational hub.

4. The deep-mission system of any preceding claim, wherein the remote station (850) is selected from the group consisting of:
a main computational hub (212'); and
a satellite station of a main computational hub (212').

5. The deep-mission system of claim 1, wherein the data of the deep-space system comprises operating data generated by deployed products of the deep-mission system, and optionally wherein the data of the deep-mission system comprises feedback generated by a user of the deep-mission system located at the deep-mission system.

6. The deep-mission system of any preceding claim, wherein the processor system operations further comprise executing the first instance of the cognitive algorithm to generate an initial cognitive output associated with an initial cognitive output action.

7. The deep-mission system of claim 6, wherein the processor system operations further comprise, prior to initiating the initial cognitive output action associated with the initial cognitive output, displaying the initial cognitive output to a user of the deep-mission system located at the deep-mission system.

8. The deep-mission system of claim 7, wherein the processor system operations further comprise, responsive to receiving user feedback on the initial cognitive output, executing post-user-feedback operations based at least in part on the user feedback.

9. The deep-mission system of claim 8, wherein the first instance of the cognitive algorithm comprises one or more of an anomaly detection cognitive algorithm, a prognostics cognitive algorithm, and a performance evaluation cognitive algorithm.

10. The deep-mission system of claim 8, wherein:
the user feedback comprises a user agreement with the initial cognitive output; and
the post-user-feedback operations comprise initiating the initial cognitive output action, or wherein the user feedback comprises a modification of the initial cognitive output, or wherein the user feedback comprises a modification of the initial cognitive output action.

11. A computer-implemented method of operating a deep-mission system comprising a processor system electronically connected to a memory, wherein the computer-implemented method comprises using the processor system to perform processor system operations comprising:
executing a first instance of a cognitive algorithm;
generating data of the deep-mission system that can be used to fine-tune the first instance of the cognitive algorithm;
transmitting the data of the deep-mission system over a deep-mission communication path to a remote station (850);
wherein the remote station (850) is operable to:
based at least in part on the data of the deep-mission system, perform fine-tuning operations on a second instance of the cognitive algorithm located at the remote station (850);
generate updates to the cognitive algorithm based on the fine-tuning operations; and
transmit the updates to the cognitive algorithm over the deep-mission communication path to the deep-mission system; and
using the updates to the cognitive algorithm to update the first instance of the cognitive algorithm.

12. The computer-implemented method of claim 11, wherein:
the deep-mission system comprises a deep-space system; and
the remote station (850) is selected from the group consisting of an earth-based computational hub, a near-earth station of an earth-based computational hub, a main computational hub, and a satellite station of a main computational hub.

13. The computer-implemented method of claim 11, wherein the data of the deep-mission system comprises:
operating data generated by deployed products of the deep-mission system; and
feedback generated by a user of the deep-mission system located at the deep-mission system.

14. The computer-implemented method of claim 11, wherein the processor system operations further comprise executing the first instance of the cognitive algorithm to generate an initial cognitive output associated with an initial cognitive output action.

15. The computer-implemented method of claim 14, wherein the processor system operations further comprise:
prior to initiating the initial cognitive output action associated with the initial cognitive output, displaying the initial cognitive output to a user of the deep-mission system located at the deep-mission system; and
responsive to receiving user feedback on the initial cognitive output, executing post-user-feedback operations based at least in part on the user feedback, and optionally wherein the first instance of the cognitive algorithm comprises one or more of an anomaly detection cognitive algorithm, a prognostics cognitive algorithm, and a performance evaluation cognitive algorithm, and optionally wherein:
the user feedback comprises one or more of a user agreement with the initial cognitive output, a modification of the initial cognitive output, and a modification of the initial cognitive output action; and
the post-user-feedback operations comprise initiating the initial cognitive output action.
